# EUROPÄISCHE PATENTSCHRIFT

(11) **EP 3 284 660 B1**
(45) Veröffentlichungstag und Bekanntmachung des Hinweises auf die Patenterteilung: **09.10.2019**
(21) Anmeldenummer: 16184226.5
(22) Anmeldetag: 15.08.2016
(51) Int. Cl.: B62D 33/04, F25D 19/00

(54) **KOFFERAUFBAU EINES NUTZFAHRZEUGS MIT EINGESETZTER TRANSPORTKÄLTEMASCHINE**
BOX BODY OF A COMMERCIAL VEHICLE WITH INSERTABLE TRANSPORT COOLING MACHINE
SUPERSTRUCTURE DE VEHICULE UTILITAIRE COMPRENANT UNE MACHINE FRIGORIFIQUE DE TRANSPORT INTEGREE

(43) Veröffentlichungstag der Anmeldung: 21.02.2018
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A1- 1 961 595
- EP-A1- 2 442 055
- DE-A1- 3 818 224
- US-A- 5 284 023
- US-A1- 2009 211 288

## Beschreibung

Die Erfindung betrifft einen Kofferaufbau eines Nutzfahrzeugs, insbesondere Lastkraftwagens, Anhängers oder Sattelaufliegers, mit einem Wandpaneel und einer Transportkältemaschine, wobei das Wandpaneel eine Montageöffnung zur Aufnahme der Transportkältemaschine aufweist, wobei die Transportkältemaschine abschnittsweise in der Montageöffnung angeordnet ist und wobei in der Montageöffnung zwischen dem Wandpaneel und der Transportkältemaschine wenigstens eine Dichtung vorgesehen ist. Ferner betrifft die Erfindung ein Verfahren zur Herstellung eines solchen Kofferaufbaus.

Nutzfahrzeuge, etwa in Form von Lastkraftwagen, Anhängern oder Sattelaufliegern, die Kofferaufbauten tragen, sind in unterschiedlicher Ausgestaltung bekannt. Dabei sind die Nutzfahrzeuge vorzugsweise zum Transport von Gütern, also der zu transportierenden Ladung, überwiegend im öffentlichen Straßenverkehr vorgesehen. Die Kofferaufbauten dieser Nutzfahrzeuge zeichnen sich durch feste Seitenwände, ein festes Dach und eine feste Stirnwand aus und unterscheiden sich insoweit von sogenannten Planenaufbauten, bei denen wenigstens eine Seitenwand und regelmäßig auch das Dach durch eine Plane verschlossen ist.

Die festen Wände der Kofferaufbauten sind typischerweise als Paneele aufgebaut. Bekannt ist dabei insbesondere der Aufbau der Paneele durch eine äußere Decklage, eine innere Decklage und eine dazwischen vorgesehene Kernlage, die meist aus einem geschäumten Kunststoff gebildet wird. Die Decklagen sind bedarfsweise selbst mehrlagig aufgebaut und umfassen wenigstens eine strukturgebende Lage, die dem Paneel die ausreichende Steifigkeit verleiht. Die strukturgebende Lage kann beispielsweise als Kunststoffschicht, insbesondere als faserverstärkte Kunststoffschicht ausgebildet sein. In vielen Fällen wird die strukturgebende Lage der Decklagen durch ein Blech, insbesondere Aluminium- oder Stahlblech, bereitgestellt. Die Paneele umschließen einen Laderaum des Kofferaufbaus, in dem die Ladung aufgenommen werden kann. Da die Paneele von Kofferaufbauten Feuchtigkeit aus dem Laderaum fernhalten, werden Kofferaufbauten vielfach zum Trockentransport von feuchtigkeitsempfindlichen Gütern eingesetzt. Da zudem der geschäumte Kunststoff der Kernlage eine gute thermische Isolation des Laderaums ermöglicht, werden Kofferaufbauten auch häufig zum Kühltransport von temperaturempfindlichen Gütern verwendet.

Damit die Temperatur der temperaturempfindlichen Güter einen von den Gütern abhängigen Grenzwert nicht übersteigt, muss der Laderaum des Nutzfahrzeugs meist gekühlt werden. Zu diesem Zweck weisen die Kofferaufbauten Transportkältemaschinen auf, die gekühlte Luft erzeugen, die in den Laderaum geblasen wird. Die der Luft beim Kühlen entzogene Wärme wird von der Transportkältemaschine an der Außenseite des Kofferaufbaus an die Umgebung abgegeben. Um sowohl gekühlte Luft in den Laderaum blasen und Wärme an die Umgebung abgeben zu können, sind die Transportkältemaschinen typischerweise in eine Montageöffnung im Stirnwandpaneel der Kofferaufbauten eingesetzt. Ein Teil der Transportkältemaschine ist im Kofferaufbau, d.h. an der Innenseite des Stirnwandpaneels, und ein anderer Teil der Transportkältemaschine außerhalb des Kofferaufbaus, d.h. an der Außenseite des Stirnwandpaneels, vorgesehen ist. Selbstverständlich kann die Transportkältemaschine grundsätzlich auch in ein anderes Paneel des Kofferaufbaus als das Stirnwandpaneel eingesetzt werden, das Einsetzen der Transportkältemaschine in das Stirnwandpaneel hat sich jedoch aus Platzgründen bewährt.

Um zu vermeiden, dass Wärme infolge von Konvektion in den gekühlten Laderaum gelangt und somit zu einem erhöhten Energiebedarf führt, wird der sich zwischen der Montageöffnung in der Stirnwand und der darin eingesetzten Transportkältemaschine bildende Spalt abgedichtet. Die zu diesem Zweck verbauten Dichtungen weisen typischerweise eine oder mehrere flexible Dichtlippen auf, die mit ihren freien Enden am Stirnwandpaneel oder an der Transportkältemaschine anliegen und so den Spalt zwischen dem Stirnwandpaneel und der Transportkältemaschine verschließen.

Die EP 1 961 595 A1 zeigt einen Kofferaufbau nach dem Oberbegriff von Anspruch 1. Weitere derartige Vorrichtungen sind aus den Dokumenten DE 38 18 224 A1, US 2009/021128 A1 und EP 2 442 055 A1 bekannt.

In der Praxis hat sich jedoch gezeigt, dass die thermische Isolation des Laderaums in vielen Fällen nicht zufriedenstellend oder verbesserungsbedürftig ist. Es besteht mithin weiter Verbesserungsbedarf hinsichtlich der thermischen Isolierung und der entsprechenden Wärmeverluste bei Kühlkofferaufbauten.

Daher liegt der vorliegenden Erfindung die Aufgabe zugrunde, den Kofferaufbau und das Verfahren zu dessen Herstellung jeweils der eingangs genannten und zuvor näher erläuterten Art derart auszugestalten und weiterzubilden, dass eine verbesserte thermische Isolation des Kofferaufbaus erreicht wird, ohne einen unverhältnismäßigen Fertigungsaufwand in Kauf nehmen zu müssen.

Diese Aufgabe ist bei einem Kofferaufbau nach dem Oberbegriff des Anspruchs 1 dadurch gelöst, dass die Dichtung wenigstens einen geschäumten Kunststoff aufweist und dass die Dichtung wenigstens einen nach außen wenigstens im Wesentlichen abgeschlossenen und mit einem geschäumten Kunststoff ausgeschäumten Dichtungsraum und/oder wenigstens ein den geschäumten Kunststoff in einer Richtung senkrecht zum Wandpaneel unter Kompression haltendes Halteprofil aufweist.

Ferner ist die genannte Aufgabe gemäß Anspruch 13 durch ein Verfahren zur Herstellung eines Kofferaufbaus nach einem der Ansprüche 1 bis 12, gelöst
- bei dem der wenigstens eine Dichtungsraum durch wenigstens zwei den Querschnitt des Dichtungsraums wenigstens im Wesentlichen umschließende, separate Elemente gebildet wird und
- bei dem wenigstens ein den Dichtungsraum bildendes Element vor dem Einsetzen der Transportkältemaschine in die Montageöffnung am Wandpaneel und/oder an der Transportkältemaschine festgelegt und/oder bei dem wenigstens ein den Dichtungsraum bildendes Element nach dem Einsetzen der Transportkältemaschine in die Montageöffnung und vor dem Einbringen des zu schäumenden Kunststoffs in den Dichtungsraum montiert, insbesondere mit dem wenigstens einen anderen Element verbunden, und/oder dass wenigstens ein den Dichtungsraum bildendes Element nach dem Einbringen von zu schäumendem Kunststoff in den Dichtungsraum montiert, insbesondere mit dem wenigstens einen anderen Element verbunden, wird.

Im Übrigen ist die vorgenannte Aufgabe gemäß Anspruch 15 gelöst durch ein Verfahren zur Herstellung eines Kofferaufbaus nach einem der Ansprüche 1 bis 12, bei dem der wenigstens eine geschäumte Kunststoff nach der Montage der Transportkältemaschine in der Montageöffnung im Wandpaneel durch wenigstens ein, vorzugsweise aus wenigstens zwei, insbesondere formschlüssig und/oder stoffschlüssig miteinander verbundenen, Halteprofilteilen gebildetes, Halteprofil zwischen dem Wandpaneel und der Transportkältemaschine in einer Richtung senkrecht zum Wandpaneel komprimiert wird.

Die Erfindung hat erkannt, dass es aus thermodynamischer Sicht vorteilhaft ist, den Spalt zwischen der Montageöffnung im Wandpaneel und der Transportkältemaschine durch einen geschäumten Kunststoff abzudichten. Dabei hat die Erfindung weiter erkannt, dass es zur Abdichtung des entsprechenden Spalts besonders bevorzugt ist, in dem Spalt einen Dichtungsraum bereitzustellen, der nach der Montage der Transportkältemaschine in der Montageöffnung ausgeschäumt werden kann. Auf diese Weise kann die Dichtung an die jeweilige Montagesituation angepasst werden, beispielweise Toleranzen sowie Montageabweichungen ausgleichen.

Durch die Dichtung, die einen nach außen wenigstens im Wesentlichen abgeschlossenen Dichtungsraum bereitstellt, wird ein wenigstens im Wesentlichen abgeschlossener Hohlraum geschaffen, in den der zu schäumende Kunststoff eingebracht werden kann. Der Kunststoff wird dann im Dichtungsraum geschäumt, wobei der Kunststoff nicht wegfließen oder sich ungehindert in unerwünschter Weise ausdehnen kann. Des Weiteren kann der Dichtungsraum so flexibel gestaltet werden, dass bei der Montage der Dichtung auf die jeweilige Montagesituation Rücksicht genommen werden kann. Je nach Montagesituation kann dann der Dichtungsraum unterschiedlich groß und/oder unterschiedlich geformt ausgebildet werden. Der dann für die jeweilige Montagesituation hinsichtlich Größe und/oder Form geeignete Dichtungsraum kann dann anschließend zuverlässig ausgeschäumt werden.

Um den Dichtungsraum in der gewünschten Weise ausbilden zu können, so dass eine möglichst optimale Adaption an die jeweilige Montagesituation erreicht werden kann, ist es verfahrensmäßig vorgesehen, dass der wenigstens eine Dichtungsraum durch wenigstens zwei den Querschnitt des Dichtungsraums wenigstens im Wesentlichen umschließende, separate Elemente gebildet wird. Die Elemente zur Bildung des Dichtungsraums können dabei in unterschiedlicher Weise vorgesehen werden, um entsprechend der jeweiligen Elemente eine einfache, zügige, zuverlässige und kostengünstige Fertigung des Kofferaufbaus bereitstellen zu können. Wenigstens ein den Dichtungsraum bildendes Element kann vor dem Einsetzen der Transportkältemaschine in die Montageöffnung am Wandpaneel und/oder an der Transportkältemaschine festgelegt werden. Dieses Vorgehen ist einfach und zweckmäßig, da das entsprechende Element dann zusammen mit der Transportkältemaschine montiert oder davor montiert wird. Dann ist die Montageöffnung noch gut zugänglich. Alternativ oder zusätzlich kann wenigstens ein den Dichtungsraum bildendes Element nach dem Einsetzen der Transportkältemaschine in die Montageöffnung und vor dem Einbringen des zu schäumenden Kunststoffs in den Dichtungsraum montiert werden. Auf diese Weise kann die Größe und die Form des Dichtungsraums an die jeweilige Montagesituation angepasst werden. Besonders zweckmäßig ist es bei dieser Anpassung, wenn das entsprechende Element dabei mit wenigstens einem anderen Element verbunden wird. Wenigstens ein den Dichtungsraum bildendes Element kann ergänzend oder alternativ auch nach dem Einbringen von zu schäumendem Kunststoff in den Dichtungsraum montiert, insbesondere mit dem wenigstens einen anderen Element verbunden, werden. Auf diese Weise kann beispielsweise einfach ein Verschluss des Dichtungsraums erreicht werden, insbesondere wenn der Dichtungsraum zuvor an die jeweilige Montagesituation angepasst worden ist.

Eine Anpassung der geschäumten Dichtung an die jeweilige Montagesituation kann auch durch das Einbringen wenigstens eines bereits geschäumten Kunststoffs, etwa im Form wenigstens einer geschäumten Dichtschnur, erreicht werden. Die Anpassung der Dichtung, insbesondere des wenigstens einen geschäumten Kunststoffs, hinsichtlich der Größe und/oder der Form im Spalt zwischen dem Wandpaneel und der Transportkältemaschine kann alternativ oder zusätzlich auch durch ein Halteprofil erreicht werden. Das Halteprofil hält dabei den wenigstens einen geschäumten Kunststoff nicht nur formschlüssig im Spalt zwischen dem Wandpaneel und der Transportkältemaschine, sondern stellt eine wenigstens geringfügige Kompression des wenigstens einen Kunststoffs in einer Richtung senkrecht zum Wandpaneel bereit. Der geschäumte Kunststoff übt also vorzugsweise eine Rückstellkraft in Richtung senkrecht zum Wandpaneel auf das Halteelement aus, in deren Folge der wenigstens eine geschäumte Kunststoff die Bestrebung hat, sich senkrecht zum Wandpaneel weiter auszudehnen, ganz gleich, ob der geschäumte Kunststoff in die entsprechende Richtung zuvor bereits eine entsprechende Ausdehnung eingenommen hat oder nicht. Die entsprechende Ausdehnung wird infolge des Halteprofils verhindert. Die Kompression in der Richtung senkrecht zum Wandpaneel sorgt dabei dafür, dass der verbleibende Spalt zwischen Wandpaneel und Transportkältemaschine in der Ebene des Wandpaneels ausgefüllt wird. Mit anderen Worten dehnt sich der wenigstens eine geschäumte Kunststoff infolge der Kompression senkrecht zum Paneel in der Ebene des Wandpaneels bzw. wird der geschäumte Kunststoff gegen die in dieser Richtung angrenzenden Bauteile gedrückt. Der Spalt zwischen Wandpaneel und Transportkältemaschine wird somit zuverlässig geschlossen und ein konvektiver Wärmeverlust vermieden, auch wenn die abzudichtende Spaltbreite je nach Montagesituation infolge von Toleranzen oder Montageungenauigkeiten variiert.

Der geschäumte Kunststoff muss tatsächlich nicht in der Weise komprimiert werden, dass das von dem wenigstens einen geschäumten Kunststoff eingenommene Volumen infolge des Haltelements verringert wird. Es soll vielmehr eine Kompression in eine Richtung stattfinden, die durch eine Expansion in eine andere Richtung kompensiert wird. Der wenigstens eine geschäumte Kunststoff ist daher vorzugsweise elastisch und/oder komprimierbar vorgesehen. Dabei bietet es sich an, wenn der geschäumte Kunststoff eine geschlossene Porenstruktur (geschlossenzellige Struktur) aufweist, um das Eindringen von Feuchtigkeit in die Porenstruktur zu vermeiden.

Alternativ zu dem zuvor beschriebenen Verfahren kann der wenigstens eine geschäumte Kunststoff nach der Montage der Transportkältemaschine in der Montageöffnung im Wandpaneel durch wenigstens ein Halteprofil im Dichtungsraum zwischen dem Wandpaneel und der Transportkältemaschine in einer Richtung senkrecht zum Wandpaneel komprimiert werden. Das entsprechende Zusammendrücken des wenigstens einen geschäumten Kunststoffs bewirkt ein Auseinanderdrücken in der Ebene des Wandpaneels zum Schließen des den wenigstens einen geschäumten Kunststoff aufnehmenden Spalts zwischen Wandpaneel und Transportkältemaschine.

Zum Zwecke der thermischen Isolation ist es dabei grundsätzlich bevorzugt, wenn das Halteprofil aus Kunststoff gebildet wird. Besonders bevorzugt ist es zur Komprimierung des wenigstens einen geschäumten Kunststoffs, wenn das Halteprofil aus wenigstens zwei, insbesondere formschlüssig und/oder stoffschlüssig miteinander verbundenen, Halteprofilteilen gebildeten wird.

Nachfolgend werden der besseren Verständlichkeit halber und zur Vermeidung unnötiger Wiederholungen der Kofferaufbau und die Verfahren zu dessen Herstellung gemeinsam beschrieben, ohne jeweils im Einzelnen zwischen dem Kofferaufbau und den jeweiligen Verfahren zu unterscheiden. Für den Fachmann ist jedoch anhand des Kontextes ersichtlich, welche Merkmale jeweils in Bezug auf den Kofferaufbau und die jeweiligen Verfahren bevorzugt sind.

Bei einer ersten besonders bevorzugten Ausgestaltung des Kofferaufbaus und der Verfahren wird die Dichtung wenigstens im Wesentlichen umlaufend zwischen dem Wandpaneel und der Transportkältemaschine vorgesehen. So werden nicht oder unzureichend thermisch abgedichtete Bereiche zwischen dem Wandpaneel und der Transportkältemaschine in der Montageöffnung vermieden. Dabei kann beispielsweise der mit dem geschäumten Kunststoff ausgeschäumte, nach außen wenigsten im Wesentlichen abgeschlossene Dichtungsraum wenigstens im Wesentlichen umlaufend zwischen dem Wandpaneel und der Transportkältemaschine vorgesehen sein oder es kann in wenigstens einem Eckbereich der Dichtung bzw. der Montageöffnung ein separates Eckstück zwischen den Enden wenigstens eines mit dem geschäumten Kunststoff ausgeschäumten, nach außen wenigsten im Wesentlichen abgeschlossenen Dichtungsraums angeordnet sein. Die Eckbereiche werden auf diese Weise abgedichtet, um für eine zufriedenstellende thermische Isolation zu sorgen. Es kann auch eine Kombination der vorbeschriebenen Maßnahmen vorgesehen sein, so dass beispielsweise nicht in allen Eckbereichen der Montageöffnung ein dichtendes Eckstück vorgesehen sein muss. Beispielsweise kann ein umlaufendes Dichtelement mit einem umlaufenden Dichtungsraum vorgesehen sein, das Endabschnitte aufweist, zwischen denen dann ein abdichtendes Eckstück vorgesehen sein kann. Alternativ oder zusätzlich kann umlaufend eine Dichtung mit mehreren abgeschlossenen Dichtungsräumen vorgesehen sein, die bedarfsweise mit ihren Längsenden in den Eckbereichen oder an anderer Stelle der Montageöffnung aneinander stoßen, um eine umlaufende thermische Abdichtung zwischen dem Wandpaneel und der Transportkältemaschine in der Montageöffnung bereitzustellen.

Hinsichtlich des durch das wenigstens eine Haltelement komprimierte wenigstens einen geschäumten Kunststoffs, ist es ebenfalls bevorzugt, wenn der entsprechende geschäumte Kunststoff wenigstens im Wesentlichen umlaufend zwischen dem Wandpaneel und der Transportkältemaschine vorgesehen ist oder in wenigstens einem Eckbereich der Dichtung bzw. der Montageöffnung ein separates Eckstück zwischen den Enden des wenigstens einen geschäumten Kunststoffs vorgesehen ist. Besonders bevorzugt ist es der einfacheren Montage halber, wenn die Enden des wenigstens einen geschäumten und umlaufend vorgesehenen Kunststoffs aneinander stoßen, und zwar insbesondere so, dass zwischen den Enden kein Spalt für einen konvektiven Wärmeverlust verbleibt. Es können natürlich auch, insbesondere in entsprechender Weise aneinanderstoßend, mehrere geschäumte Kunststoffe in einer Reihe umlaufend zur Montageöffnung vorgesehen sein, was montagetechnisch jedoch aufwendiger sein kann.

Zur einfachen und an die jeweilige Montagesituation angepassten Bildung des wenigstens einen Dichtungsraums der wenigstens einen Dichtung in der Montageöffnung kann es zweckmäßig sein, wenn der wenigstens eine Dichtungsraum durch wenigstens zwei den Querschnitt des Dichtungsraums wenigstens im Wesentlichen umschließende, separate Elemente gebildet ist. Die wenigstens zwei separaten Elemente können dann je nach Montagesituation relativ zueinander angeordnet und/oder miteinander verbunden werden, um auf einfache Weise einen Dichtungsraum zweckmäßiger Größe und/oder Form zu bilden.

Der Dichtungsraum kann grundsätzlich durch unterschiedliche Elemente wenigstens teilweise gebildet werden. Als entsprechende Elemente kommen dabei bevorzugt eine, vorzugsweise elastische, Folie, ein, vorzugsweise hartes und/oder elastisches, Kunststoffprofil, ein Weichschaumprofil, eine zwischen dem Wandpaneel und der Transportkältemaschine vorgesehene Dichtlippe und/oder ein, vorzugsweise elastischen, Schlauch in Frage. Die vorgenannten Elemente können dabei auch in geeigneter Weise kombiniert werden. So wird fertigungstechnisch eine hohe Flexibilität bereitgestellt und eine geeignete Anpassung an die jeweilige Montagesituation erreicht.

Für eine einfache Herstellung des Kofferaufbaus unter zweckmäßiger Berücksichtigung unterschiedlicher Montagesituationen kann wenigstens ein den Dichtungsraum bildendes Element vor dem Einsetzen der Transportkältemaschine in die Montageöffnung am Wandpaneel und/oder an der Transportkältemaschine festgelegt werden. Alternativ oder zusätzlich kann aus denselben Gründen wenigstens ein den Dichtungsraum bildendes Element nach dem Einsetzen der Transportkältemaschine in die Montageöffnung und vor dem Einbringen des zu schäumenden Kunststoffs in den Dichtungsraum montiert werden. Weiter bevorzugt ist es zudem, wenn das entsprechende Element dabei mit wenigstens einem anderen Element verbunden wird. Dieses andere Element kann beispielweise vor dem, Einsetzen der Transportkältemaschine in die Montageöffnung am Wandpaneel und/oder an der Transportkältemaschine festgelegt worden sein. Das eine Element kann dann besonders einfach montiert werden, während das andere Element noch einfach genug montiert werden und gleichzeitig den gebildeten Dichtungsraum an die jeweilige Montagesituation anpassen kann. Alternativ oder zusätzlich kann wenigstens ein den Dichtungsraum bildendes Element nach dem Einbringen von zu schäumendem Kunststoff in den Dichtungsraum montiert werden. Dies erlaubt ein einfaches Einbringen von zu schäumendem Kunststoff in den Dichtungsraum und zugleich ein einfaches Abschließen des Dichtungsraums nach außen. Besonders zuverlässig und effektiv ist es dabei, wenn das entsprechende Element mit wenigstens einem anderen Element verbunden ist, wobei dieses wenigstens eine Element vor dem Einbringen von zu schäumendem Kunststoff montiert worden sein kann. So können die mit der entsprechenden Montage verbundenen und zuvor beschriebenen Vorteile erreicht werden.

Wenigstens ein nach dem Einsetzen der Transportkältemaschine in die Montageöffnung montiertes, den Dichtungsraum teilweise bildendes Element kann formschlüssig oder stoffschlüssig mit wenigstens einem anderen, den Dichtungsraum teilweise bildenden Element verbunden sein. Dabei kann das wenigstens eine andere Element ebenfalls nach dem Einsetzen der Transportkältemaschine aber auch vor dem Einsetzen der Transportkältemaschinen montiert worden sein, je nachdem welche der vorgenannten Vorteile erzielt werden sollen. Dabei wird die Montage vereinfacht und die Zuverlässigkeit der Verbindung erhöht, wenn die entsprechenden Elemente durch den ausgeschäumten Kunststoff miteinander verbunden sind. Der ausgeschäumte Kunststoff kann nämlich hohe Adhäsionskräfte mit den Elementen aufbauen und diese somit letztlich miteinander verkleben.

Alternativ oder zusätzlich kann wenigstens ein den Dichtungsraum wenigstens teilweise bildendes Element formschlüssig, stoffschlüssig und/oder kraftschlüssig nach dem Einsetzen der Transportkältemaschine in die Montageöffnung zwischen dem Wandpaneel und der Transportkältemaschine montiert werden. Dies eröffnet die Möglichkeit einer einfachen Montage des Elements und gleichzeitig der einfachen Anpassung der Dichtung, insbesondere des Dichtungsraums, hinsichtlich Größe und/oder Form. Im Übrigen kann die Bildung des Dichtungsraums aus mehreren Elementen den Vorteil bieten, dass die Elemente nicht nur zu unterschiedlichen Zeitpunkten bei der Kofferaufbaufertigung, sondern auch aus unterschiedlichen Fügerichtungen montiert werden können, was die Montage insgesamt vereinfachen kann.

Darüber hinaus ist es ganz grundsätzlich bevorzugt, wenn wenigstens ein den Dichtungsraum bildendes Element wenigstens eine Öffnung zum Passieren von Luft aufweist, die während dem Ausschäumen des Dichtungsraums aus dem Dichtungsraum verdrängt wird. Wenn die Luft beim Schäumen des Kunststoffs zuverlässig aus dem Dichtungsraum entweichen kann, wird dieser zuverlässiger in der gewünschten Weise ohne größere Lufteinschlüsse ausgeschäumt. Infolge der entsprechenden Öffnungen kann der Dichtungsraum nach außen nicht völlig abgeschlossen sein. Die Öffnungen sollten daher vorzugsweise in Richtung des Wandpaneels oder des Laderaums weisen, um ein Eindringen von außerhalb des Kofferaufbaus zu vermeiden. Es kann beim Ausschäumen des Dichtungsraums auch dafür gesorgt werden, dass der Kunststoff die Öffnungen beim Ausschäumen verschließt, wenn die aus dem Dichtungsraum zu verdrängende Luft wenigstens im Wesentlichen vollständig verdrängt worden ist. Dann werden die Öffnungen nicht mehr benötig und der Eintritt von Feuchtigkeit in den Dichtungsraum bzw. den geschäumten Kunststoff wird weiter vermieden. Grundsätzlich können die Öffnung aber auch auf andere Weise nach dem Ausschäumen des Dichtungsraums feuchtigkeitsdicht verschlossen werden.

Das Haltelement kann der unerwünschten Wärmeleitung entgegenwirken, wenn das Halteprofil aus Kunststoff gebildet ist. Besonders zuverlässig und einfach hinsichtlich der Montage ist es, wenn der wenigstens eine geschäumte Kunststoff durch das wenigstens eine Halteprofil formschlüssig zwischen dem Wandpaneel und der Transportkältemaschine gehalten wird. Dabei ist es hinsichtlich der Montage des Halteprofils und/oder der Komprimierung des geschäumten Kunststoffs zweckmäßig, wenn das Halteprofil aus wenigstens zwei, vorzugsweise formschlüssig und/oder stoffschlüssig miteinander verbundenen, Halteprofilteilen gebildet ist. Die Halteprofilteile können dabei bedarfsweise ähnlich wie bei den zuvor beschriebenen Elementen zu unterschiedlichen Zeitpunkten und aus unterschiedlichen Fügerichtungen gefügt werden, was die Montage insgesamt vereinfachen kann.

Der einfachen und zuverlässigen Montage halber kann ein Halteprofilteil vor dem Einsetzen der Transportkältemaschine in die Montageöffnung am Wandpaneel und/oder an der Transportkältemaschine festgelegt sein. Dies Vereinfacht die Montage des wenigstens einen Halteprofilteils erheblich, da dieses nicht nachträglich in den Spalt zwischen dem Wandpaneel und der Transportkältemaschine eingebracht werden muss. Alternativ dazu, insbesondere aber zusätzlich, kann wenigstens ein Halteprofilteil nach dem Einsetzen der Transportkältemaschine in die Montageöffnung montiert werden. Dieses nachträgliche Montieren eines Halteprofilteils, insbesondere im Zusammenspiel mit einem vormontierten Halteprofiteil, kann einfach erfolgen und zugleich die gewünschte Kompression des wenigstens einen geschäumten Kunststoffs zur Anpassung des wenigstens einen Kunststoffs an die jeweilige Montagesituation sicherstellen. Insoweit ist es weiter zu Schaffung einer langlebigen Dichtung bevorzugt, wenn die Halteprofilteile, insbesondere das vormontierte und das nachträglich montierte Halteprofilteil, miteinander verbunden werden.

Um den wenigstens einen geschäumten Kunststoff sicher im Spalt zwischen dem Wandpaneel und der Transportkältemaschine zu fixieren, wobei der Spalt zuverlässig abgedichtet wird, kann das Halteprofil, insbesondere die Halteprofilteile, von entgegengesetzten Richtungen senkrecht zum Wandpaneel am wenigstens einen geschäumten Kunststoff anliegen. Alternativ oder zusätzlich kann das Halteprofil, insbesondere wenigstens ein Halteprofilteil, durch wenigstens eine zwischen dem Wandpaneel und der Transportkältemaschine vorgesehenen Dichtlippe gebildet werden. Dabei kann der wenigstens eine geschäumte Kunststoff unmittelbar an der wenigstens einen Dichtlippe anliegen.

Je nach der Ausgestaltung der Dichtung kann es zweckmäßig sein, wenn das wenigstens eine den Dichtungsraum bildende Element, das wenigstens eine Halteprofil und/oder das wenigstens eine Halteprofilteil formschlüssig, insbesondere genietet oder geschraubt, stoffschlüssig und/oder kraftschlüssig an dem Wandpaneel und/oder der Transportkältemaschine festgelegt ist. Dies eröffnet die Möglichkeit einer einfachen sowie zweckmäßigen Montage, die dabei zu einer Kostensenkung des Kofferaufbaus beitragen kann.

Hinsichtlich der thermischen Isolation, der Verarbeitbarkeit und der Kosten ist es bevorzugt, wenn der geschäumte Kunststoff im wenigstens einen Dichtungsraum und/oder der vom Halteprofil komprimiert gehaltene geschäumte Kunststoff ein Polyurethan ist. Dabei bieten sich in diesem Zusammenhang insbesondere Einkomponentensysteme bzw. ein Einkomponentenschaum an. Je nach Anwendungsfall kann es bevorzugt sein, wenn der Kunststoff beim Ausschäumen aushärtet und somit einen steifen Kunststoffschaum im wenigstens einen Dichtungsraum bildet. Es kann aber auch ein Kunststoff verwendet werden, der nach dem Ausschäumen flexibel und komprimierbar ist, was insbesondere dem Komprimieren durch das Halteprofil zugutekommt.

Die im Zusammenhang mit der beschriebenen Dichtung zu erzielenden und ebenfalls beschriebenen Vorteile kommen in besonderem Maße bei durch die Dichtung abzudichtenden Spalten mit einer Spaltbreite zwischen dem Wandpaneel und der Transportkältemaschine, die zwischen 4 mm und 40 mm, insbesondere zwischen 5 mm und 30 mm, insbesondere zwischen 10 mm und 20 mm, beträgt, zum Tragen. Diese Spaltbreiten sind so klein, dass die jeweilige Montagesituation zu großen Unterschieden führen kann und die Montage der Dichtung grundsätzlich recht aufwendig ist.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem Kofferaufbau in einer schematischen, perspektivischen Ansicht,
- Fig. 2: ein Wandpaneel eines Nutzfahrzeugs des Standes der Technik mit einer Montageöffnung in einer Draufsicht,
- Fig. 3: ein Detail des Wandpaneels aus Fig. 1 mit in der Montageöffnung aufgenommener Transportkältemaschine in einer Schnittansicht entlang der Schnittebene III-III aus Fig. 2,
- Fig. 4: ein Detail eines ersten erfindungsgemäßen Kofferaufbaus in einer Schnittansicht gemäß Fig. 3,
- Fig. 5: ein Detail eines zweiten erfindungsgemäßen Kofferaufbaus in einer Schnittansicht gemäß Fig. 3,
- Fig. 6: ein Detail eines dritten erfindungsgemäßen Kofferaufbaus in einer Schnittansicht gemäß Fig. 3,
- Fig. 7: ein Detail eines vierten erfindungsgemäßen Kofferaufbaus in einer Schnittansicht gemäß Fig. 3,
- Fig. 8: ein Detail eines fünften erfindungsgemäßen Kofferaufbaus in einer Schnittansicht gemäß Fig. 3,
- Fig. 9: ein Detail eines sechsten erfindungsgemäßen Kofferaufbaus in einer Schnittansicht gemäß Fig. 3,
- Fig. 10: ein Detail eines siebten erfindungsgemäßen Kofferaufbaus in einer Schnittansicht gemäß Fig. 3,
- Fig. 11: ein Detail eines achten erfindungsgemäßen Kofferaufbaus in einer Schnittansicht gemäß Fig. 3,
- Fig. 12: ein Detail eines neunten erfindungsgemäßen Kofferaufbaus in einer Schnittansicht gemäß Fig. 3,
- Fig. 13: ein Wandpaneel eines zehnten erfindungsgemäßen Kofferaufbaus mit einer Montageöffnung in Draufsicht und
- Fig. 14A-C: das Detail XVI des Wandpaneels aus Fig. 13 in alternativen Ausgestaltungen.

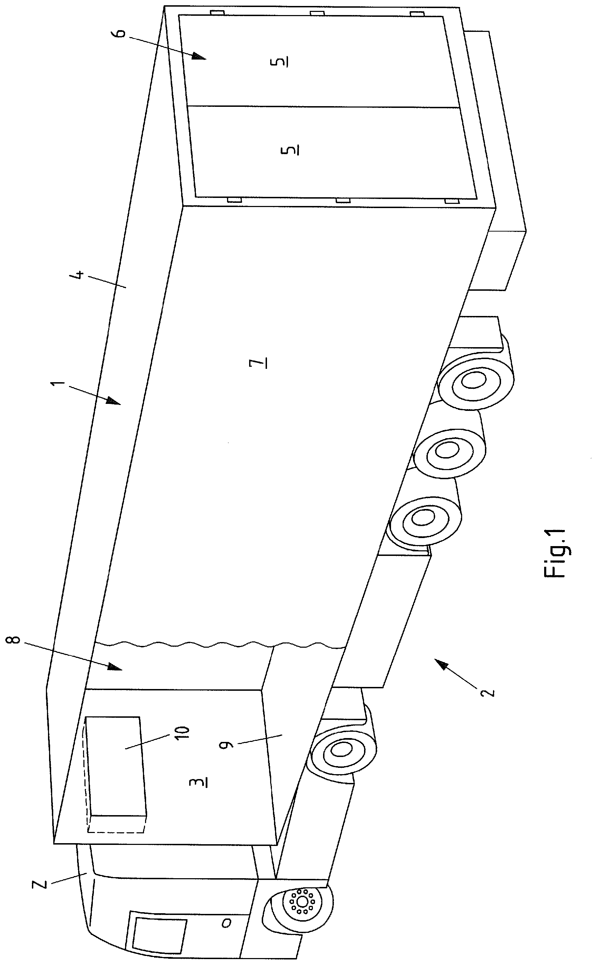

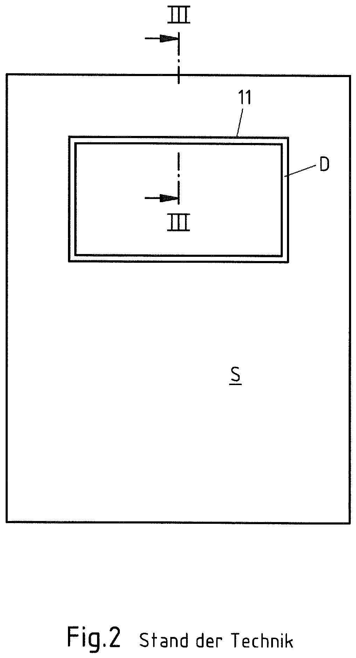

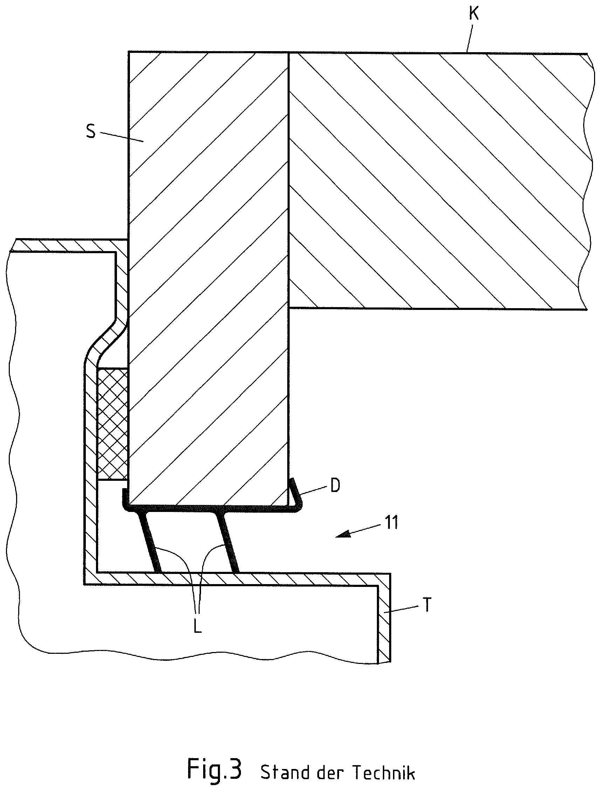

In der Fig. 1 ist ein Kofferaufbau 1 eines Nutzfahrzeugs 2 in Form eines Sattelaufliegers dargestellt, der von einem Zugfahrzeug Z gezogen wird. Der Kofferaufbau 1 umfasst eine feste Stirnwand 3, ein festes Dach 4, eine durch Flügeltüren 5 gebildete Rückwand 6 und feste Seitenwände 7. Der Kofferaufbau 1 umschließt dabei einen Laderaum 8 zur Aufnahme der zu transportierenden Güter. Die vordere Seitenwand 7 ist teilweise weggelassen worden, um den Blick in den Laderaum 8, auf den Ladeboden 9 und auf die in der Stirnwand 3 montierte Transportkältemaschine 10 freizugeben, die lediglich schematisch dargestellt ist. In der Fig. 2 ist ein aus dem Stand der Technik bekanntes, die Stirnwand eines Kofferaufbaus K bildendes Stirnwandpaneel S mit einer Montageöffnung M zur Aufnahme einer Transportkältemaschine T dargestellt. Der besseren Anschaulichkeit halber ist die in der Montageöffnung M montierte Transportkältemaschine T wegelassen worden. In der Fig. 3 ist das Stirnwandpaneel S in einer Schnittansicht gemäß der Schnittebene III-III aus Fig. 2 mit in die Montageöffnung M eingesetzter Transportkältemaschine T dargestellt. Zwischen der Transportkältemaschine T und dem Stirnwandpaneel S bildet sich im montierten und dargestellten Zustand in der Ebene des Stirnwandpaneels S ein Spalt zwischen dem Stirnwandpaneel S und der Transportkältemaschine T aus, der zur Vermeidung des konvektiven Wärmeverlusts mit einer Dichtung D aus Kunststoff abgedichtet ist. Die Dichtung D weist dazu zwei sich vom Stirnwandpaneel S in Richtung der Transportkältemaschine T erstreckende Dichtlippen L auf. Die Dichtlippen L verhindern, dass Luft durch den Spalt zwischen dem Stirnwandpaneel S und der Transportkältemaschine T in den Laderaum und/oder zur Umgebung strömen kann.

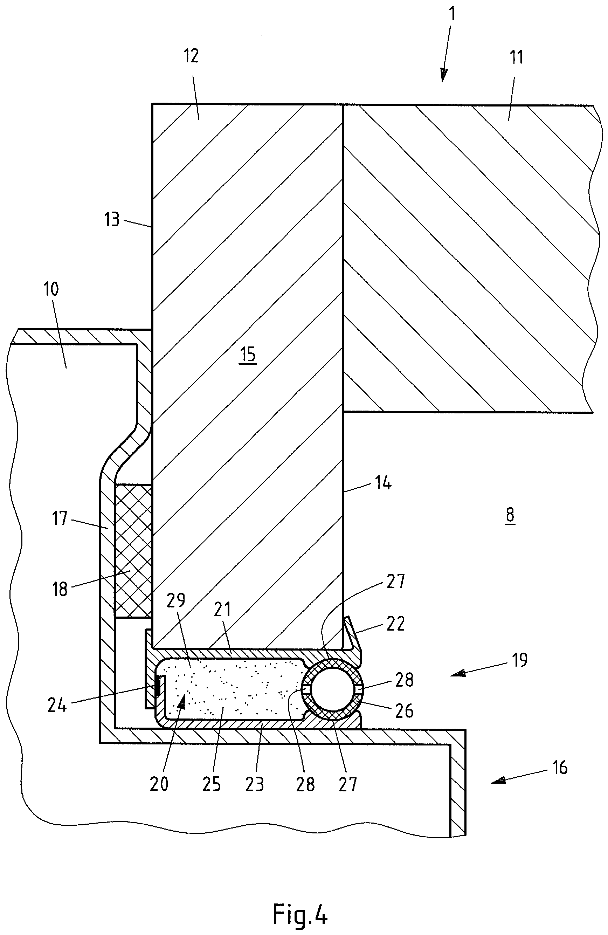

In der Fig. 4 ist ein Kofferaufbau 1 ähnlich dem in der Fig. 3 dargestellten Kofferaufbau dargestellt. Der Kofferaufbau 1 weist ein Dachpaneel 11 und ein Wandpaneel 12, insbesondere Stirnwandpaneel, auf. Das dargestellte und insoweit bevorzugte Wandpaneel 12 weist eine äußere Decklage 13, eine innere Decklage 14 und eine dazwischen vorgesehene Kernlage 15 aus einem geschäumten Kunststoff auf. Die Decklagen 13,14 sind bedarfsweise selbst mehrlagig aufgebaut und umfassen wenigstens eine strukturgebende Lage, die dem Wandpaneel 12 eine ausreichende Steifigkeit verleiht. Die strukturgebende Lage kann beispielsweise als Kunststoffschicht, insbesondere als faserverstärkte Kunststoffschicht, ausgebildet oder durch ein Blech, insbesondere Aluminium- oder Stahlblech, bereitgestellt sein. In dem Wandpaneel 12 ist eine Montageöffnung 16 vorgesehen, in die eine Transportkältemaschine 10 eingesetzt ist, welche mit dem Wandpaneel 12 verbunden ist. Dabei deckt die Transportkältemaschine 10 die Montageöffnung 16 auf der Außenseite des Wandpaneels 12 über einen Flansch 17 ab, zwischen dem und dem Wandpaneel 12 sich eine Kühlgerätedichtung 18 befindet, um einen Eintritt von Feuchtigkeit etc. zu vermeiden. In dem sich zwischen der Transportkältemaschine 10 und dem Wandpaneel 12 in der Ebene des Wandpaneels 12 ausbildenden Spalt 19 ist eine Dichtung 20 vorgesehen. Die dargestellte und insoweit bevorzugte Dichtung 20 ist umlaufend um die Montageöffnung 16 angeordnet.

Die Dichtung 20 umfasst ein wandpaneelseitiges Element 21 in Form eines Profils aus Kunststoff, das vor dem Einsetzen der Transportkältemaschine 10 in die Montageöffnung 16 kraftschlüssig am Wandelement 12 festgelegt worden ist. Dazu weist das dargestellte und insoweit bevorzugte wandpaneelseitige Element 21 einen flexiblen Rand 22 auf, der unter Ausbildung einer Rückstellkraft in Richtung des Laderaums 8 gebogen wird, so dass der Rand 22 im montierten Zustand von innen gegen das Wandpaneel 12 drückt. Nach dem Einsetzen der Transportkältemaschine 10 in die Montageöffnung 16 wird ein transportkältemaschinenseitiges Element 23 montiert, das an der Transportkältemaschine 10 anliegt und an dem der Außenseite des Wandpaneels 12 zugewandten Ende mit dem wandpaneelseitigen Element 21 über einen Klebstoff 24 stoffschlüssig verbunden wird. Das wandpaneelseitige Element 21 und das transportkältemaschinenseitige Element 23 bilden einen Teil eines Dichtungsraums 25, in den nach der Montage des transportkältemaschinenseitigen Elements 23 ein zu schäumender Kunststoff eingebracht wird. Sodann wird ein laderaumseitiges Element 26 formschlüssig, insbesondere zwischen entsprechende Aufnahmen 27 des wandpaneelseitigen Elements 21 und des transportkältemaschinenseitigen Elements 23 eingesetzt.

Daher ist das laderaumseitige Element 26 vorzugsweise flexibel ausgebildet, während das wandpaneelseitige Element 21 und das transportkältemaschinenseitige Element 23 starr ausgebildet sein können. Das laderaumseitige Element 26 kann unter Ausbildung einer Rückstellkraft zwischen die beiden anderen Elemente 21,23 eingesetzt werden, wodurch das laderaumseitige Element 26 dafür sorgt, dass das transportkältemaschinenseitige Element 23 zuverlässig in Anlage an der Transportkältemaschine 10 ist. Das transportkältemaschinenseitige Element 23, das wandpaneelseitige Element 21 und das laderaumseitige Element 26 umschließen und bilden wenigstens im Wesentlichen den Dichtungsraum 25 der Dichtung 20. Vorzugsweise sind alle Elemente 21,23,26 aus Kunststoff gebildet. Das laderaumseitige Element 23 weist zudem Öffnungen 28 auf, durch die die beim Schäumen des Kunststoffs aus dem Dichtungsraum 25 verdrängte Luft aus dem Dichtungsraum 25 entweichen kann. Nach dem Ausschäumen des Kunststoffs ist der Dichtungsraum 25 wenigstens im Wesentlichen mit geschäumtem Kunststoff 29 ausgefüllt.

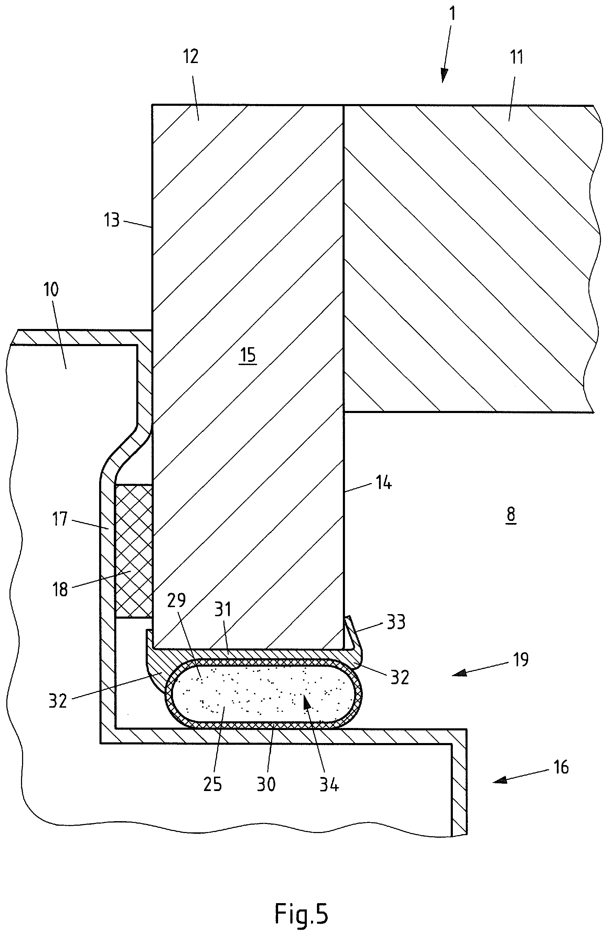

In der Fig. 5 ist ein Kofferaufbau 1 ähnlich dem Kofferaufbau 1 gemäß Fig. 4 dargestellt. Im Unterschied dazu wird der Dichtungsraum 25 durch einen flexiblen Schlauch 30 gebildet, der zwischen dem Wandpaneel 12 und der Transportkältemaschine 10 angeordnet ist. Der Schlauch 30 wird von einem Halteprofil 31 formschlüssig in Position gehalten, das dazu der Innenseite und der Außenseite des Wandpaneels 12 zugeordnete Haltenasen 32 aufweist. Das Halteprofil 31 ist vor dem Einsetzen der Transportkältemaschine 10 in die Montageöffnung 16 kraftschlüssig mit dem Wandpaneel 12 verbunden worden. Dazu ist das Halteprofil 31 auf das Wandpaneel 12 aufgeschoben worden, wozu das Halteprofil 31 einen flexiblen Rand 33 aufweist, der zunächst unter Ausbildung einer Rückstellkraft zur Seite gebogen wurde und im montierten Zustand laderaumseitig gegen das Wandpaneel 12 drückt. Nach dem Einsetzen der Transportkältemaschine 10 in die Montageöffnung 16 wird der Schlauch 30 zwischen das Halteprofil 31 und die Transportkältemaschine 10 geschoben und mit dem zu schäumenden Kunststoff versehen. Der Kunststoff schäumt aus, füllt den Dichtungsraum 25 und drückt dabei den Schlauch 30 gegen das Halteelement 31. Der Schlauch 30 gelangt dabei zwischen die der Innenseite und der Außenseite des Wandpaneels 12 zugeordneten Haltenasen 32 und ist letztlich durch geschäumten Kunststoff 29 ausgefüllt. Der Schlauch 30 und das Halteprofil 31 bilden dann die Dichtung 34.Der geschäumte Kunststoff 29 kann in dem Schlauch 30 so unter Druck stehen, dass er durch das Halteprofil 31 in der dargestellten Form unter Kompression in einer Richtung senkrecht zum Wandpaneel 12 gehalten wird. Diese Kompression des geschäumten Kunststoffs 29 bzw. des Schlauchs 30 unterstützt die vollflächige Anlage bzw. das vollflächige Anpressen des Schlauchs 30 an das Halteprofil 31 einerseits und die Transportkältemaschine 10 andererseits.

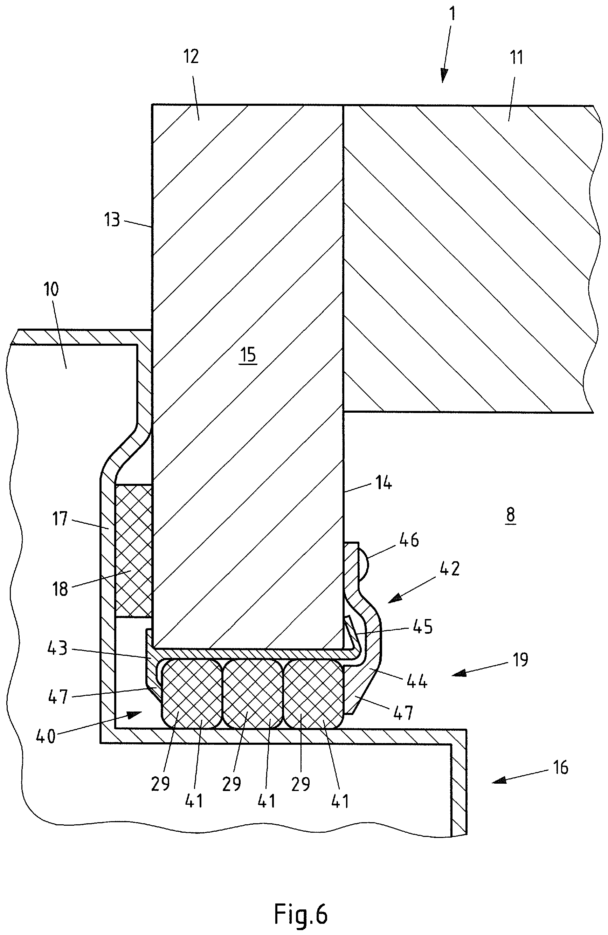

In der Fig. 6 ist ein Kofferaufbau 1 ähnlich dem Kofferaufbau 1 gemäß Fig. 5 dargestellt. Im Unterschied dazu weist die Dichtung 40 drei Schnüre 41 aus einem geschäumten Kunststoff 29 zum Abdichten des Spalts 19 zwischen Wandpaneel 12 und Transportkältemaschine 10auf. Es könnte aber auch eine andere Anzahl von Schnüren vorgesehen sein, beispielsweise auch eine einziger Schnur. Die Schnüre 41 aus geschäumtem Kunststoff 29 werden mit Hilfe eines Halteprofils 42 in Position gehalten, das sich aus zwei separaten Halteprofilteilen 43,44 zusammensetzt. Das äußere Halteprofilteil 43 ist kraftschlüssig auf das Wandpaneel 12 angrenzend zur Montageöffnung 16 geschoben. Ein Rand 45 des äußeren Halteprofilteils 43 drückt infolge einer Rückstellkraft von innen gegen das Wandpaneel 12. Die Montage des äußeren Halteprofilteils 43 hat bereits vor dem Einsetzen der Transportkältemaschine 10 in die Montageöffnung 16 stattgefunden. Nach dem Einsetzen der Transportkältemaschine 10 in die Montageöffnung 16 sind die Schnüre 41 aus geschäumtem Kunststoff 29 in den Spalt 19 zwischen der Transportkältemaschine 10 und dem Halteprofil 42 bzw. dem Wandpaneel 12 eingebracht worden. Sodann wurde von der Innenseite des Wandpaneels 12 das innere Halteprofilteil 44 mit dem Wandpaneel 12 verbunden, insbesondere mit einem Niet 46. Die Halteprofilteile 43,44 bilden der Innenseite und der Außenseite des Wandpaneels 12 zugeordnete Haltenasen 47, die die Schnüre e 41 aus geschäumtem Kunststoff 29 in Position halten und senkrecht zum Wandpaneel komprimieren, also so gegen die Schnüre 41 drücken, so dass die Schnüre 41 aus geschäumtem Kunststoff dichtend gegen das äußeren Halteprofilteil 43 bzw. das Wandpaneel 21 und die Transportkältemaschine 10 drücken bzw. dort dichtend anliegen. Im Ergebnis wird eine zuverlässige Abdichtung des entsprechenden Spalts 46 erzielt.

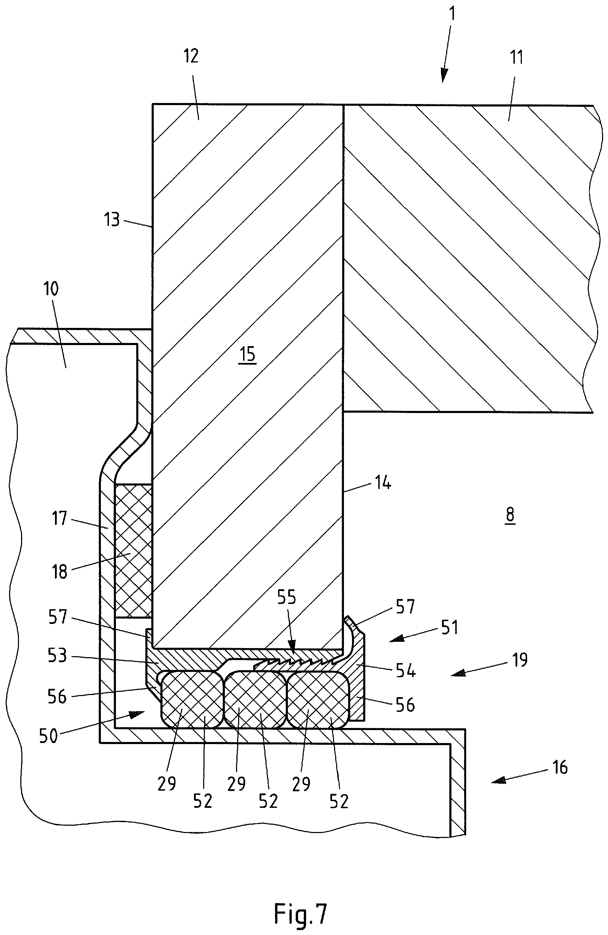

In der Fig. 7 ist ein Kofferaufbau 1 ähnlich dem Kofferaufbau 1 gemäß Fig. 6 dargestellt. Im Unterschied dazu weist die Dichtung 50 ein anderes Halteprofil 51 zum Halten der Schnüre 52 aus geschäumtem Kunststoff 29 auf. Es könnte zudem grundsätzlich auch eine andere Anzahl von Schnüren vorgesehen sein, beispielsweise auch eine einzige Schnur aus geschäumtem Kunststoff 29. Das Halteprofil 51 weist ebenfalls einen äußeren Halteprofilteil 53 und einen inneren Halteprofilteil 54 auf. Zunächst wird die Transportkältemaschine 10 in die Montageöffnung 16 im Wandpaneel 12 eingesetzt, dann wird von der Innenseite des Wandprofils 12 der äußere Halteprofilteil 53 in den Spalt 19 zwischen der Transportkältemaschine 10 und dem Wandpaneel 12 geschoben. Gleiches erfolgt mit den Schnüren 52 aus geschäumtem Kunststoff 29. Abschließend wird von der Innenseite des Wandpaneels 12 das innere Halteprofilteil 54 in den Spalt 19 zwischen der Transportkältemaschine 10 und dem Wandpaneel 12 geschoben. Beide Halteprofilteile 53,54 weisen eine korrespondierende Verzahnung 55 auf. Beim Einschieben des inneren Halteprofilteils 54 gleiten die Zähne der Verzahnung 55 aneinander ab. Die Zähne werden durch die Schnüre 52 infolge der Rückstellkraft des geschäumten Kunststoffs 29 ineinander gedrückt. In die Auszugsrichtung des inneren 54 Halteprofilteils sind die Zähne infolge ihrer wenigstens im Wesentlichen parallel zum Wandpaneel 12 ausgerichteten und zur Innenseite des Wandpaneels 12 weisenden Flanken in sperrendem Eingriff miteinander, so dass die Verzahnungen 55 des inneren Halteprofilteils 54 und des äußeren Halteprofilteils 53 formschlüssig ineinandergreifen. Das innere Halteprofilteil 54 und das äußere Halteprofilteil 53 weisen Haltenasen 56 zum Fixieren der Schnüre 52 im Spalt 19 zwischen dem Halteprofil 51 und der Transportkältemaschine 10 und Montagerippen 57 zum Umgreifen des Wandpaneels 12 zur Positionierung des Halteprofils 51 in der Montageöffnung 16 auf. Die Verbindung der Halteprofilteile 53,54 erfolgt so, dass die Halteprofilteile 53,54 soweit ineinander geschoben werden, dass es zu einer Kompression des geschäumten Kunststoffs 29 kommt, infolge dessen der geschäumte Kunststoff 29 gegen das Halteprofil 51 bzw. das Wandpaneel 12 einerseits und die Transportkältemaschine 10 andererseits gepresst wird.

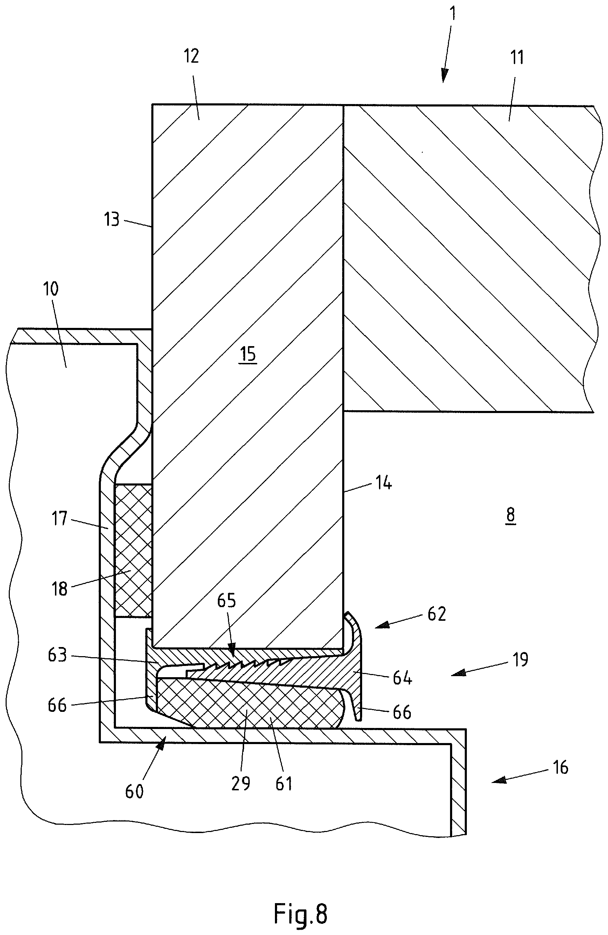

In der Fig. 8 ist ein Kofferaufbau 1 ähnlich dem Kofferaufbau 1 gemäß Fig. 7 dargestellt. Im Unterschied dazu weist die Dichtung 60 jedoch lediglich eine Schnur 61 aus einem geschäumten Kunststoff 29 und ein anderes Halteprofil 62 zum Halten der Schnur 61 auf. Alternativ könnten aber auch mehrere Schnüre vorgesehen sein. Das Halteprofil 62 ist ähnlich dem in der Fig. 7 ausgebildet, wobei das Halteprofil 62 ebenfalls aus zwei Halteprofilteilen 63,64 gebildet wird. Die Montage und die Verbindung der Halteprofilteile 63,64 erfolgt bedarfsweise ähnlich wie bei der Dichtung 50 gemäß Fig. 7 mit einer Verzahnung 65, weshalb an dieser Stelle prinzipiell auf die entsprechenden Ausführungen zur Fig. 7 verwiesen wird. Im Unterschied zu den Halteprofilteilen 53,54 der Fig. 7 verjüngen sich die Halteprofilteile 63,64 oder wenigstens ein Halteprofilteil in Richtung ihrer freien Enden. Die Halteprofilteile 63,64 können also unter Kompression des geschäumten Kunststoffs 29 weiter gegeneinander eingeschoben werden. So kann eine erhebliche Kompression des geschäumten Kunststoffs 29 und damit eine zuverlässige und großflächige Abdichtung erreicht werden. Durch die an den Halteprofilteilen 63,64 vorgesehen, der Innenseite und der Außenseite des Wandpaneels 12 zugeordneten Haltenasen 66 wird sichergestellt, dass die Schnur 61 im Spalt 19 zwischen der Transportkältemaschine 10 und dem Wandpaneel 12 gehalten und bedarfsweise weiter komprimiert wird.

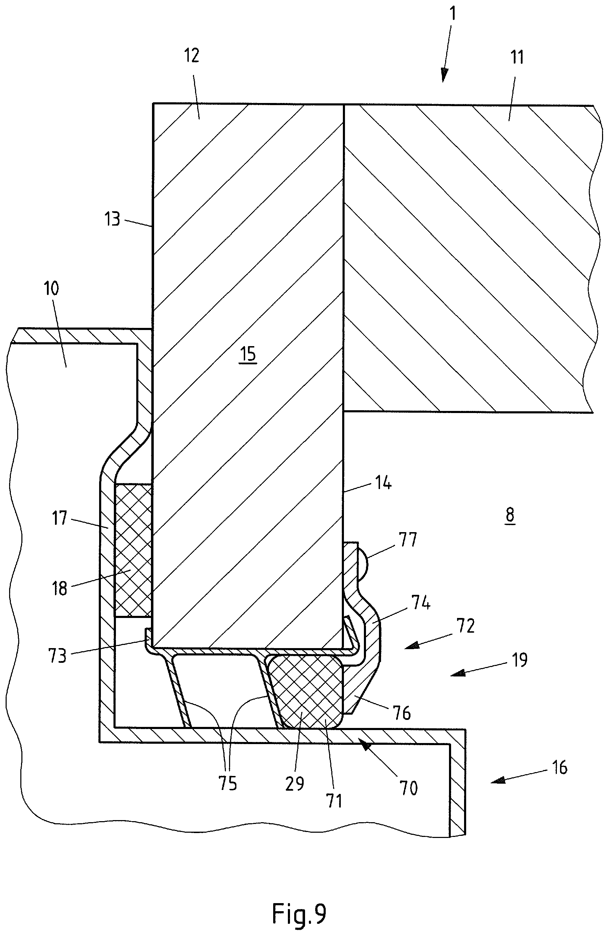

In der Fig. 9 ist ein Kofferaufbau 1 ähnlich dem Kofferaufbau 1 gemäß Fig. 6 dargestellt. Im Unterschied dazu weist die Dichtung 70 jedoch eine Schnur71 aus geschäumtem Kunststoff 29 auf, die durch ein alternatives Halteprofil 72 gehalten wird. Das Halteprofil 72 weist ein äußeres Halteprofilteil 73 und ein inneres Halteprofilteil 74 auf. Das äußere Halteprofilteil 73 stellt zwei Dichtlippen 75 bereit. Es könnte aber auch jede andere Anzahl von Dichtlippen vorgesehen sein. Das äußere Halteprofilteil 73 ist beim dargestellten und insoweit bevorzugten Kofferaufbau 1 am Wandpaneel 12 festgelegt. Das Verbinden des äußeren Halteprofilteils 73 mit dem Wandpaneel 12 ist bereits vor dem Einsetzen der Transportkältemaschine 10 in die Montageöffnung 16 erfolgt. Die freien Enden der Dichtlippen 75 liegen dabei an der Transportkältemaschine 10 an. Der in Richtung des Laderaums 8 weisenden Seite der inneren Dichtlippe 75 zugeordnet wird dann die Schnur 71 aus geschäumten Kunststoff 29 vorgesehen. Die Schnur 71 ist nach dem Einsetzen der Transportkältemaschine 10 in das Wandpaneel 12 eingesetzt worden. Anschließen wird das innere Halteprofilteil 74 montiert, das den Schlauch 71 zusammen mit dem äußeren Halteprofilteil 73 formschlüssig zwischen dem Wandpanel 12 und der Transportkältemaschine 10 hält und dabei zugleich in einer Richtung senkrecht zum Wandpaneel 12 komprimiert. Dazu weist das innere Halteprofilteil 74 eine Haltenase 76 auf und ist das innere Halteprofilteil 74 beispielsweise mit einem Niet 77 an dem Wandpaneel 12 festgelegt.

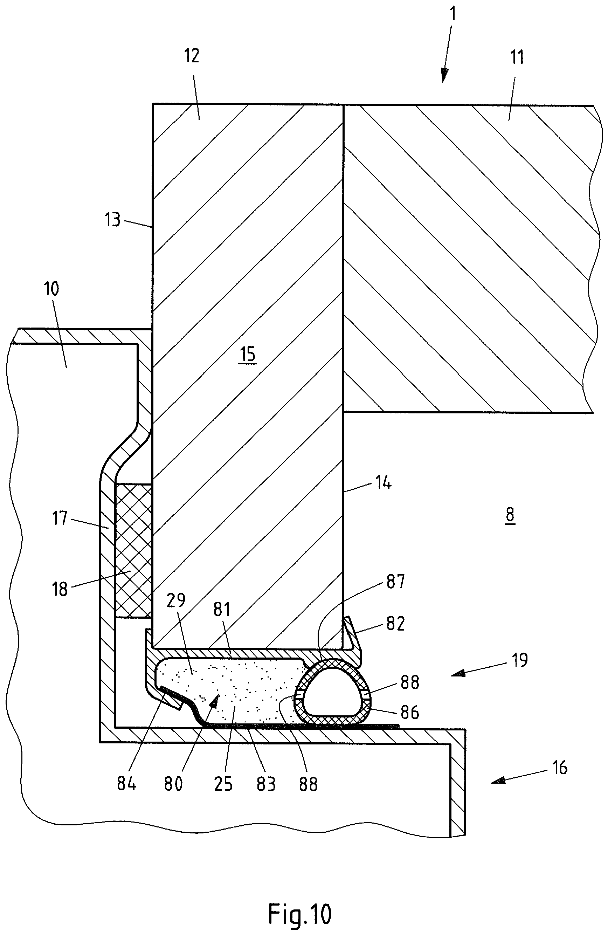

In der Fig. 10 ist ein Kofferaufbau 1 ähnlich dem Kofferaufbau 1 gemäß Fig. 4 dargestellt. Im Unterschied dazu ist eine alternative Dichtung 80 vorgesehen. Die Dichtung 80 umfasst einen wandpaneelseitiges, den Dichtungsraum 25 teilweise bildendes Element 81, das ähnlich dem wandpaneelseitigen Element 21 der Fig. 4 mit einem flexiblen Rand 82 versehen und über den flexiblen Rand 82 kraftschlüssig am Wandpaneel 12 gehalten ist. Das transportkältemaschinenseitige Element 83 zur teilweise Bildung des Dichtungsraums 25 wird durch eine Folie gebildet. Die Folie kann bereits vor der Montage des wandpaneelseitigen Elements 81 am wandpaneelseitigen Element 81 festgelegt sein. Bei der dargestellten und insoweit bevorzugten Dichtung 80 ist das transportkältemaschinenseitige Element 83 an einem der Außenseite des wandpaneelseitigen Elements 81 zugeordneten Abschnitt mit dem wandpaneelseitigen Element 81 verbunden. Das dargestellte und insoweit bevorzugte wandpaneelseitige Element 81 weist für diese Verbindung eine Verbindungsrippe 84 auf. Zudem wird das wandpaneelseitige Element 81, bedarfsweise wie dies zuvor bereits für das in der Fig. 4 dargestellte wandpaneelseitige Element 21 beschrieben worden ist, mit dem Wandpaneel 12 verbunden. Infolge der Flexibilität der Folie erlaubt diese problemlos das nachträgliche Einsetzen der Transportkältemaschine 10, wonach das transportkältemaschinenseitige Element 83 flach auf der Transportkältemaschine 10 liegt. Es wird dabei bereits ein Teil des Dichtungsraums 25 geschaffen, in den zu schäumender Kunststoff eingebracht werden kann. Bevor ein laderaumseitiges Element 86 von der Laderaumseite des Wandpaneels 12 eingesetzt wird, um den Dichtungsraum 25 wenigstens im Wesentlichen abzuschließen. Das laderaumseitige Element 86 greift formschlüssig in eine Aufnahme 87 im wandpaneelseitigen Element 81 ein und wird zudem unter Ausbildung einer Rückstellkraft zusammengedrückt, so dass das laderaumseitige Element 86 zwischen dem wandpaneelseitigen Element 81 und dem transportkältemaschinenseitigen Element 83 eingeklemmt und kraftschlüssig mit dem transportkältemaschinenseitigen Element 83 verbunden wird. Das laderaumseitige Element 86 weist Öffnungen 88 auf, durch die die beim Schäumen des Kunststoffs aus dem Dichtungsraum 25 verdrängte Luft entweichen kann. Auf diese Weise wird der Dichtungsraum 25 vollständig ausgeschäumt, wobei der Kunststoff 29 das laderaumseitige Element 86 mit dem wandpaneelseitigen Element 81 und dem transportkältemaschinenseitigen Element 83 verbinden, insbesondere verkleben, kann.

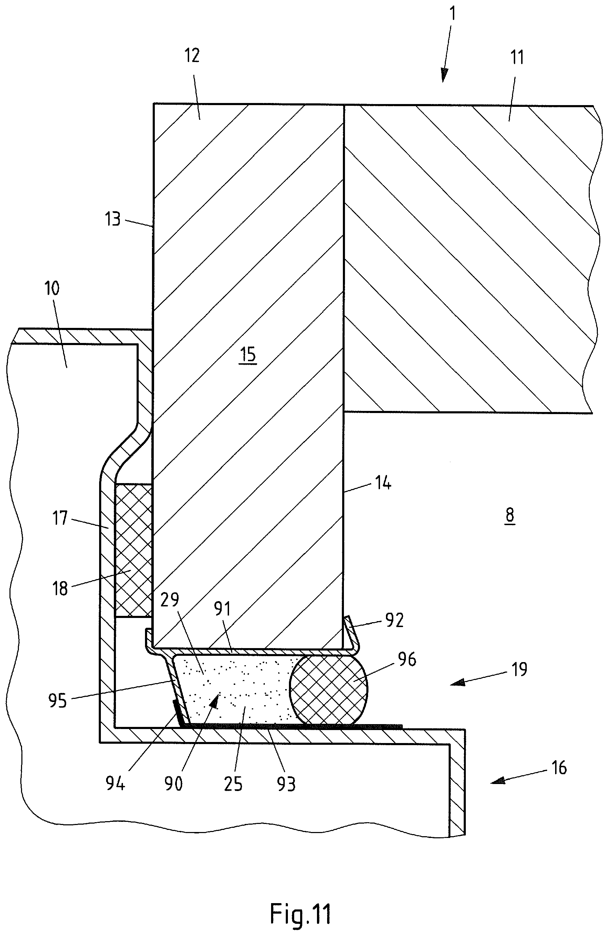

In der Fig. 11 ist ein Kofferaufbau 1 ähnlich dem Kofferaufbau 1 gemäß Fig. 10 dargestellt. Im Unterschied dazu weist die Dichtung 90 ein alternatives wandpaneelseitiges, den Dichtungsraum 25 teilweise bildendes Element 91 auf, das über einen inneren Rand 92 am Wandpaneel 12 festgelegt und mit einem transportkältemaschinenseitigen Element 93 in Form einer Folie an einem der Außenseite des Wandpaneels 12 zugeordneten Abschnitt 94 des wandpaneelseitigen Elements 91 verbunden ist, der an einer an der Transportkältemaschine 10 anliegenden Dichtlippe 95 vorgesehen ist. Das wandpaneelseitige Element 91 kann zusammen mit dem transportkältemaschinenseitigen Element 93 vor dem Einsetzen der Transportkältemaschine 10 in die Montageöffnung 16 am Wandpaneel 12 festgelegt werden. Die Transportkältemaschine 10 kann nachträglich eingesetzt werden, wonach das transportkältemaschinenseitigen Element 93 auf der Transportkältemaschine 10 liegt und die Dichtlippe 95 an der Transportkältemaschine 10 anliegt. Somit ist der Dichtungsraum 25 durch das wandpaneelseitige Element 91 und das transportkältemaschinenseitige Element 93 bereits teilweise bereitgestellt. In diesem Teil des Dichtungsraums 25 kann dann zu schäumender Kunststoff eingebacht werden. Anschließend wird der Dichtungsraum 25 durch das Einsetzen eines laderaumseitigen Elements 96 zwischen das transportkältemaschinenseitige Element 93 und das wandpaneelseitige Element 91 abgeschlossen. Das laderaumseitige Element 96 wird dabei durch einen flexiblen und komprimierbaren geschäumten Kunststoff gebildet. Das laderaumseitige Element 96 kann so als eine Art Stopfen in den Spalt 19 zwischen dem Wandpaneel 12 und der Transportkältemaschine 10 eingesetzt werden. Der Kunststoff kann so vom ausgeschäumten Kunststoff 29 komprimiert und/oder in Richtung des Laderaums 8 verschoben werden. So wird der Dichtungsraum 25 ohne größere Luftblasen vollständig ausgeschäumt. Die aus dem Dichtungsraum 25 zu verdrängende Luft kann bedarfsweise durch eine offenporige Struktur des Kunststoffs des laderaumseitigen Elements 96 entweichen. Alternativ können auch Öffnungen vorgesehen sein oder es kann vorgesehen sein, dass die Luft anderweitig entweicht.

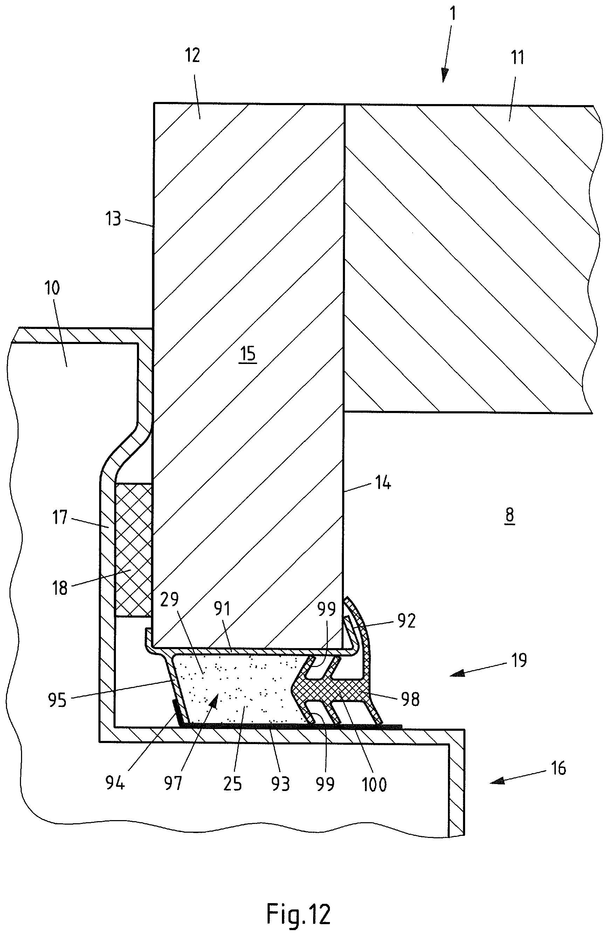

In der Fig. 12 ist ein Kofferaufbau 1 ähnlich dem Kofferaufbau 1 gemäß Fig. 11 dargestellt. Im Unterschied dazu ist die Dichtung 97 mit einem anderen laderaumseitigen Element 98 als Abschluss des Dichtungsraums 25 vorgesehen. Das laderaumseitige Element 98 wird ebenfalls als Stopfen und ebenfalls nach dem Einbringen von zu schäumendem Kunststoff in den Dichtungsraum 25 zwischen das wandpaneelseitige Element 91 und das transportkältemaschinenseitige Element 93 eingesetzt. Damit das laderaumseitigen Element 98 kraftschlüssig im entsprechenden Spalt gehalten wird, weist das laderaumseitigen Element 98 Lippen 99 auf, die nach außen und schräg in Richtung des Laderaums 8 weisen. Beim dargestellten und insoweit bevorzugten laderaumseitigen Element 98 weist der Querschnitt des laderaumseitigen Elements 98 abschnittsweise eine tannenbaumartige Struktur auf, die von den Lippen 99 und einem die Lippen 99 tragenden Steg 100 gebildet wird.

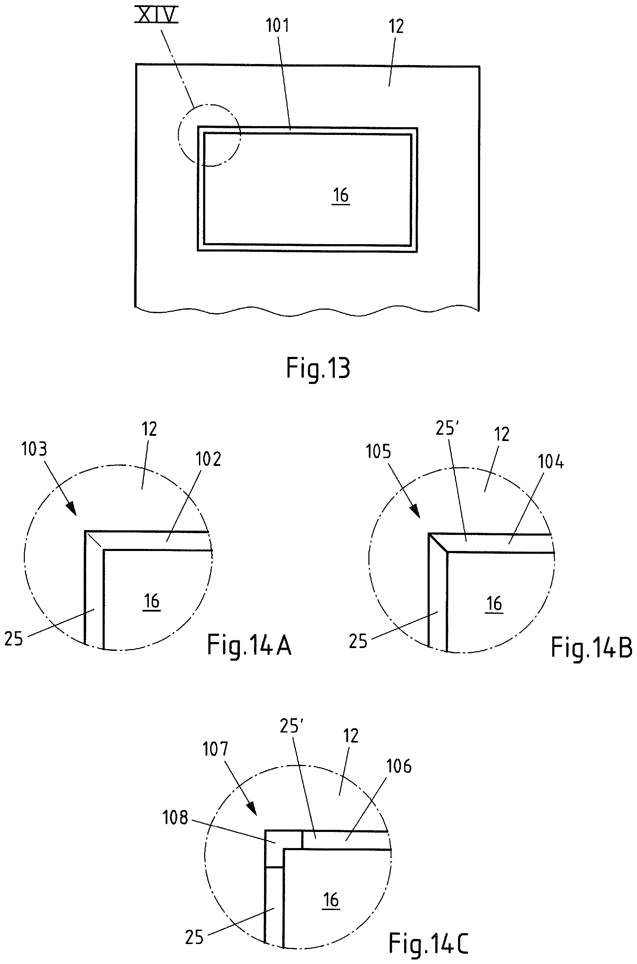

In der Fig. 13 ist ein Teil eines Wandelements 12 mit einer Montageöffnung 16 und einer umlaufend um die Montageöffnung 16 vorgesehene Dichtung 101 dargestellt. Der besseren Übersichtlichkeit halber ist die in die Montageöffnung 16 eingesetzte Transportkältemaschine nicht dargestellt. Die Montageöffnung 16 ist rechteckig ausgebildet. In den Eckbereichen der Montageöffnung 16 kann die Dichtung 101 auf unterschiedliche Weise vorgesehen sein. In der Fig. 14A-C sind mögliche Alternativen für den Eckbereich XIV aus der Fig. 13 dargestellt. Die Eckbereiche der Montageöffnung 16 können alle in identischer Weise abgedichtet sein. Es können aber in den Ecken auch unterschiedliche der nachfolgend beschriebenen Alternativen in jeglicher Kombination vorgesehen sein.

Bei der Dichtung 102 gemäß Fig. 14A erstreckt sich der Dichtungsraum 25 der Dichtung 102 ohne Unterbrechung entlang des gesamten Eckbereichs 103. In der Fig. 14B ist dagegen eine Dichtung 104 mit zwei separate Dichtungsräume 25,25' dargestellt, die im Eckbereich 105 einander gegenüberliegen. In der Fig. 14C ist eine Dichtung 106 ebenfalls mit zwei separate Dichtungsräumen 25,25' dargestellt, die jedoch beabstandet voneinander angrenzend zum Eckbereich 107 enden. In dem verbleibenden Zwischenraum im Eckbereich 107 der Montageöffnung 16 ist ein Eckstück 108 eingesetzt, dass ebenfalls einen hohen Wärmedurchgangswiderstand bereitstellen kann. Dazu kann als Eckstück 108 beispielswiese ein vorgefertigtes und geschäumtes Kunststoffteil eingesetzt werden.

## Patentansprüche

1. Kofferaufbau (1) eines Nutzfahrzeugs, insbesondere Lastkraftwagens, Anhängers oder Sattelaufliegers, mit einem Wandpaneel (12) und einer Transportkältemaschine (10), wobei das Wandpaneel (12) eine Montageöffnung (16) zur Aufnahme der Transportkältemaschine (10) aufweist, wobei die Transportkältemaschine (10) abschnittsweise in der Montageöffnung (16) angeordnet ist und wobei in der Montageöffnung (16) zwischen dem Wandpaneel (12) und der Transportkältemaschine (10) wenigstens eine Dichtung vorgesehen ist,
**dadurch gekennzeichnet, dass**
die Dichtung (20,34,40,50,60,70,80,101,102,104,106) wenigstens einen geschäumten Kunststoff (29) aufweist und dass die Dichtung wenigstens einen nach außen wenigstens im Wesentlichen abgeschlossenen und mit einem geschäumten Kunststoff (29) ausgeschäumten Dichtungsraum (25) und/oder wenigstens ein den geschäumten Kunststoff (29) in einer Richtung senkrecht zum Wandpaneel (12) unter Kompression haltendes Halteprofil (31,42,51,62,71) aufweist.

2. Kofferaufbau nach Anspruch 1,
**dadurch gekennzeichnet, dass**
die Dichtung (20,34,40,50,60,70,80,101,102,104,106) wenigstens im Wesentlichen umlaufend zwischen dem Wandpaneel (12) und der Transportkältemaschine (10) vorgesehen ist und dass, vorzugsweise, der mit dem geschäumten Kunststoff (29) ausgeschäumte, nach außen wenigsten im Wesentlichen abgeschlossene Dichtungsraum (25) wenigstens im Wesentlichen umlaufend zwischen dem Wandpaneel (12) und der Transportkältemaschine (10) vorgesehen ist oder in Eckbereichen (103,105,107) der Dichtung (102,104,106) separate Eckstücke (108) zwischen mit dem geschäumten Kunststoff (29) ausgeschäumten, nach außen wenigsten im Wesentlichen abgeschlossenen Dichtungsräumen (25) angeordnet sind.

3. Kofferaufbau nach Anspruch 1 oder 2,
**dadurch gekennzeichnet, dass**
der wenigstens eine Dichtungsraum (25) durch wenigstens zwei den Querschnitt des Dichtungsraums (25) wenigstens im Wesentlichen umschließende, separate Elemente (21,23,26,30,41,52,61,71,81,83,86,91,93,96,98) gebildet ist.

4. Kofferaufbau nach einem der Ansprüche 1 bis 3,
**dadurch gekennzeichnet, dass**
der wenigstens eine mit dem geschäumten Kunststoff (29) ausgeschäumte Dichtungsraum (25) wenigstens teilweise durch eine, vorzugsweise elastischen, Folie, wenigstens teilweise durch ein, vorzugsweise hartes und/oder elastisches, Kunststoffprofil, wenigstens teilweise durch ein Weichschaumprofil, wenigstens teilweise durch eine zwischen dem Wandpaneel (12) und der Transportkältemaschine (10) vorgesehene Dichtlippe (95) und/oder durch einen, vorzugsweise elastischen, Schlauch (30,41,52,61,71) gebildet ist.

5. Kofferaufbau einem der Ansprüche 1 bis 4,
**dadurch gekennzeichnet, dass**
wenigstens ein den Dichtungsraum (25) bildendes Element (21,81,83,91,93) vor dem Einsetzen der Transportkältemaschine (10) in die Montageöffnung (16) am Wandpaneel (12) und/oder an der Transportkältemaschine (10) festgelegt ist und/oder dass wenigstens ein den Dichtungsraum (25) bildendes Element (23,30,41,52,61,71) nach dem Einsetzen der Transportkältemaschine (10) in die Montageöffnung (16) und vor dem Einbringen des zu schäumenden Kunststoffs in den Dichtungsraum (25) montiert, insbesondere mit wenigstens einen anderen Element (21) verbunden, ist und/oder dass wenigstens ein den Dichtungsraum (25) bildendes Element (26,86,96,98) nach dem Einbringen von zu schäumendem Kunststoff in den Dichtungsraum (25) montiert, insbesondere mit wenigstens einen anderen Element (21,23,81,83, 91,93) verbunden ist.

6. Kofferaufbau nach einem der Ansprüche 3 bis 5,
**dadurch gekennzeichnet, dass**
wenigstens ein nach dem Einsetzen der Transportkältemaschine (10) in die Montageöffnung (16) montiertes, den Dichtungsraum (25) teilweise bildendes Element (23,26,86,96,98) formschlüssig oder stoffschlüssig, insbesondere durch den ausgeschäumten Kunststoff (29), mit wenigstens einem anderen, den Dichtungsraum (25) teilweise bildenden Element (21,23,81,83,91,93) verbunden ist.

7. Kofferaufbau nach einem der Ansprüche 1 bis 6,
**dadurch gekennzeichnet, dass**
wenigstens ein den Dichtungsraum (25) wenigstens teilweise bildendes Element (23,26,30,41,52,61,71,86,96,98) formschlüssig, stoffschlüssig und/oder kraftschlüssig nach dem Einsetzen der Transportkältemaschine (10) in die Montageöffnung (16) zwischen dem Wandpaneel (12) und der Transportkältemaschine (10) montiert ist und/oder dass wenigstens ein den Dichtungsraum (25) bildendes Element (26,86) Öffnungen zum Passieren von während dem Ausschäumen des Dichtungsraums (25) aus dem Dichtungsraum (25) verdrängter Luft aufweist.

8. Kofferaufbau nach einem der Ansprüche 3 bis 7,
**dadurch gekennzeichnet, dass**
das Halteprofil (31,42,51,62,71) aus Kunststoff gebildet ist und dass, vorzugsweise, das Halteprofil (42,51,62,71) aus wenigstens zwei, vorzugsweise formschlüssig und/oder stoffschlüssig miteinander verbundenen und/oder aus Kunststoff gebildeten, Halteprofilteilen (43,44,53,54,63,64,73,74) gebildet ist.

9. Kofferaufbau nach Anspruch 8,
**dadurch gekennzeichnet, dass**
wenigstens ein Halteprofilteil (43,53,63,73) vor dem Einsetzen der Transportkältemaschine (10) in die Montageöffnung (16) am Wandpaneel (12) und/oder an der Transportkältemaschine (10) festgelegt ist und/oder dass wenigstens ein Halteprofilteil (44,54,64,74) nach dem Einsetzen der Transportkältemaschine (10) in die Montageöffnung (16) montiert, vorzugsweise mit dem wenigstens einen vormontierten Halteprofilteil (43,53,63,73) verbunden ist.

10. Kofferaufbau nach Anspruch 8 oder 9,
**dadurch gekennzeichnet, dass**
das Halteprofil (31,42,51,62,71), insbesondere die Halteprofilteile (43,44,53,54,63,64,73,74), von entgegengesetzten Richtungen senkrecht zum Wandpaneel (12) am wenigstens einen geschäumten Kunststoff (29) anliegen und/oder dass das Halteprofil (31,42,51,62,71), insbesondere wenigstens ein Halteprofilteil (43,44,53,54,63,64,73,74) durch wenigstens eine zwischen dem Wandpaneel (12) und der Transportkältemaschine (10) vorgesehenen Dichtlippe (75) gebildet ist.

11. Kofferaufbau nach einem der Ansprüche 1 bis 10,
**dadurch gekennzeichnet, dass**
das wenigstens ein den Dichtungsraum (25) bildendes Element (21,23,26,30,41,52,61,71,81,83,86,91,93,96,98), das wenigstens eine Halteprofil (31,42,51,62,71) und/oder das wenigstens eine Halteprofilteil (43,44,53,54,63,64,73,74) formschlüssig, insbesondere genietet oder geschraubt, stoffschlüssig und/oder kraftschlüssig an dem Wandpaneel (12) und/oder der Transportkältemaschine (10) festgelegt ist und/oder dass der geschäumte Kunststoff (29), insbesondere im wenigstens einen Dichtungsraum (25) ein Polyurethan, insbesondere in Form eines Einkomponentenschaums, ist.

12. Kofferaufbau nach einem der Ansprüche 1 bis 11,
**dadurch gekennzeichnet, dass**
der durch die Dichtung (20,34,40,50,60,70,80,101,102,104,106) abgedichtete Spalt zwischen dem Wandpaneel (12) und der Transportkältemaschine (10) zwischen 4 mm und 40 mm, insbesondere zwischen 5 mm und 30 mm, insbesondere zwischen 10 mm und 20 mm, breit ist.

13. Verfahren zur Herstellung eines Kofferaufbaus (1) nach einem der Ansprüche 1 bis 12,
- bei dem der wenigstens eine Dichtungsraum (25) durch wenigstens zwei den Querschnitt des Dichtungsraums (25) wenigstens im Wesentlichen umschließende, separate Elemente (21,23,26,30,41,52,61,71,81,83,86,91,93,96,98) gebildet wird und
- bei dem wenigstens ein den Dichtungsraum (25) bildendes Element (21,81,83,91,93) vor dem Einsetzen der Transportkältemaschine (10) in die Montageöffnung (16) am Wandpaneel (12) und/oder an der Transportkältemaschine (10) festgelegt und/oder bei dem wenigstens ein den Dichtungsraum (25) bildendes Element (23,30,41,52,61,71) nach dem Einsetzen der Transportkältemaschine (10) in die Montageöffnung (16) und vor dem Einbringen des zu schäumenden Kunststoffs in den Dichtungsraum (25) montiert, insbesondere mit wenigstens einen anderen Element (21) verbunden, und/oder dass wenigstens ein den Dichtungsraum (25) bildendes Element (26,86,96,98) nach dem Einbringen von zu schäumendem Kunststoff in den Dichtungsraum (25) montiert, insbesondere mit wenigstens einen anderen Element (21,23,81,83, 91,93) verbunden, wird.

14. Verfahren nach Anspruch 13,
- bei dem wenigstens ein den Dichtungsraum (25) teilweise bildendes Element (23,26,86,96,98) nach dem Einsetzen der Transportkältemaschine (10) in die Montageöffnung (16) montiert und das eine den Dichtungsraum (25) teilweise bildende Element (23,26,86,96,98) formschlüssig oder stoffschlüssig, insbesondere durch den ausgeschäumten Kunststoff (29), mit wenigstens einem anderen, den Dichtungsraum (25) teilweise bildenden Element (21,23,81,83,91,93) verbunden wird und/oder
- bei dem wenigstens ein den Dichtungsraum (25) wenigstens teilweise bildendes Element (23,26,30,41,52,61,71,86,96,98) nach dem Einsetzen der Transportkältemaschine (10) in die Montageöffnung (16) formschlüssig, stoffschlüssig und/oder kraftschlüssig zwischen dem Wandpaneel (12) und der Transportkältemaschine (10) montiert wird.

15. Verfahren zur Herstellung eines Kofferaufbaus nach einem der Ansprüche 1 bis 12,
- bei dem der wenigstens eine geschäumte Kunststoff (29) nach der Montage der Transportkältemaschine (10) in der Montageöffnung (16) im Wandpaneel (12) durch wenigstens ein, vorzugsweise aus wenigstens zwei, vorzugsweise formschlüssig und/oder stoffschlüssig miteinander verbundenen, Halteprofilteilen (43,44,53,54,63,64,73,74) gebildetes, Halteprofil (31,42,51,62,71)zwischen dem Wandpaneel (12) und der Transportkältemaschine (10) in einer Richtung senkrecht zum Wandpaneel komprimiert wird und
- bei dem, vorzugsweise, wenigstens ein Halteprofilteil (43,53,63,73) vor dem Einsetzen der Transportkältemaschine (10) in die Montageöffnung (16) am Wandpaneel (12) und/oder an der Transportkältemaschine (10) festgelegt und/oder wenigstens ein Halteprofilteil (44,54,64,74) nach dem Einsetzen der Transportkältemaschine (10) in die Montageöffnung (16) montiert, vorzugsweise mit dem wenigstens einen vormontierten Halteprofilteil (43,53,63,73), insbesondere durch das Ausschäumen des Kunststoffs im wenigstens einen Dichtungsraum (25), verbunden wird.

## Claims

1. Box body (1) of a commercial vehicle, in particular of a lorry, trailer or semitrailer, having a wall panel (12) and a transport cooling machine (10), wherein the wall panel (12) has an assembly opening (16) to receive the transport cooling machine (10), wherein the transport cooling machine (10) is arranged in sections in the assembly opening (16) and wherein at least one seal is provided in the assembly opening (16) between the wall panel (12) and the transport cooling machine (10), **characterised in that** the seal (20, 34, 40, 50, 60, 70, 80, 101, 102, 104, 106) comprises at least one foamed plastic (29) and that the seal has at least one seal chamber (25) which is outwardly at least substantially closed and is filled with a foamed plastic (29) and/or has at least one retaining profile (31, 42, 51, 62, 71) which maintains the foamed plastic (29) under compression in a direction perpendicular to the wall panel (12).

2. Box body according to claim 1, **characterised in that** the seal (20, 34, 40, 50, 60, 70, 80, 101, 102, 104, 106) is provided at least substantially circumferentially between the wall panel (12) and the transport cooling machine (10) and that, preferably, the seal chamber (25) which is filled with the foamed plastic (29) and is outwardly at least substantially closed is provided at least substantially circumferentially between the wall panel (12) and the transport cooling machine (10) or separate corner pieces (108) are arranged in corner regions (103, 105, 107) of the seal (102, 104, 106) between seal chambers (25) which are filled with the foamed plastic (29) and are outwardly at least substantially closed.

3. Box body according to claim 1 or 2, **characterised in that** the at least one seal chamber (25) is formed by at least two separate elements (21, 23, 26, 30, 41, 52, 61, 71, 81, 83, 86, 91, 93, 96, 98) which at least substantially surround the cross-section of the seal chamber (25).

4. Box body according to one of claims 1 to 3, **characterised in that** the at least one seal chamber (25) which is filled with the foamed plastic (29) is formed at least partially by a, preferably elastic, film, at least partially by a ,preferably hard and/or elastic, plastic profile, at least partially by a soft foam profile, at least partially by a sealing lip (95) provided between the wall panel (12) and the transport cooling machine (10) and/or by a preferably elastic, hose (30, 41, 52, 61, 71).

5. Box body according to one of claims 1 to 4, **characterised in that** at least one element (21, 81, 83, 91, 93) forming the seal chamber (25) is fixed to the wall panel (12) and/or to the transport cooling machine (10) before the insertion of the transport cooling machine (10) into the assembly opening (16) and/or that at least one element (23, 30, 41, 52, 61, 71) forming the seal chamber (25) is assembled after the insertion of the transport cooling machine (10) into the assembly opening (16) and before the insertion of the plastic to be foamed into the seal chamber (25), in particular is connected to at least one other element (21) and/or that at least one element (26, 86, 96, 98) forming the seal chamber (25) is assembled after the insertion of the plastic to be foamed into the seal chamber (25), in particular is connected to at least one other element (21, 23, 81, 83, 91, 93).

6. Box body according to one of claims 3 to 5, **characterised in that** at least one element (23, 26, 86, 96, 98) assembled after the insertion of the transport cooling machine (10) into the assembly opening (16) and partially forming the seal chamber (25) is connected in a form-fit or firmly bonded manner, in particular by the foamed plastic (29), to at least one other element (21, 23, 81, 83, 91, 93) partially forming the seal chamber (25).

7. Box body according to one of claims 1 to 6, **characterised in that** at least one element (23, 26, 30, 41, 52, 61, 71, 86, 96, 98) at least partially forming the seal chamber (25) is assembled between the wall panel (12) and the transport cooling machine (10) in a form-fit, firmly bonded and/or force-fit manner after the insertion of the transport cooling machine (10) into the assembly opening (16) and/or that at least one element (26, 86) forming the seal chamber (25) has openings to pass air forced out of the seal chamber (25) during the filling with foam of the seal chamber (25).

8. Box body according to one of claims 3 to 7, **characterised in that** the retaining profile (31, 42, 51, 62, 71) is formed from plastic and that, preferably, the retaining profile (42, 51, 62, 71) if formed from two retaining profile parts (43, 44, 53, 54, 63, 64, 73, 74) which are connected to each other preferably in a form-fit or firmly bonded manner and/or are formed from plastic.

9. Box body according to claim 8, **characterised in that** at least one retaining profile part (43, 53, 63, 73) is fixed to the wall panel (12) and/or to the transport cooling machine (10) before the insertion of the transport cooling machine (10) into the assembly opening (16) and/or that least one retaining profile part (44, 54, 64, 74) is assembled after the insertion of the transport cooling machine (10) into the assembly opening (16), preferably is connected to the at least one pre-assembled retaining profile part (43, 53, 63, 73).

10. Box body according to claim 8 or 9, **characterised in that** the retaining profile (31, 42, 51, 62, 71), in particular the retaining profile parts (43, 44, 53, 54, 63, 64, 73, 74) abut onto at least one foamed plastic (29) from opposite directions perpendicular to the wall panel (12) and/or that the retaining profile (31, 42, 51, 62, 71), in particular at least one retaining profile part (43, 44, 53, 54, 63, 64, 73, 74), is formed by at least one sealing lip (75) provided between the wall panel (12) and the transport cooling machine (10).

11. Box body according to one of claims 1 to 10, **characterised in that** the at least one element (21, 23, 26, 30, 41, 52, 61, 71, 81, 83, 86, 91, 93, 96, 98) forming the seal chamber (25), the at least one retaining profile (31, 42, 51, 62, 71) and/or the at least one retaining profile part (43, 44, 53, 54, 63, 64, 73, 74) is fixed in a form-fit manner, in particular riveted or screwed, in a firmly bonded and/or force-fit manner to the wall panel (12) and/or the transport cooling machine (10) and/or that the foamed plastic (29), in particular in the at least one seal chamber (25), is a polyurethane, in particular in the form of a single-component foam.

12. Box body according to one of claims 1 to 11, **characterised in that** the gap sealed by the seal (20, 34, 40, 50, 60, 70, 80, 101, 102, 104, 106) between the wall panel (12) and the transport cooling machine (10) is between 4 mm and 40 mm, in particular between 5 mm and 30 mm, in particular between 10 mm and 20 mm wide.

13. Method for producing a box body (1) according to one of claims 1 to 12,
- in which the at least one seal chamber (25) is formed by at least two separate elements (21, 23, 26, 30, 41, 52, 61, 71, 81, 83, 86, 91, 93, 96, 98) which at least substantially surround the cross-section of the seal chamber (25) and
- in which at least one element (21, 81, 83, 91, 93) forming the seal chamber (25) is fixed to the wall panel (12) and/or to the transport cooling machine (10) before the insertion of the transport cooling machine (10) into the assembly opening (16) and/or in which at least one element (23, 30, 41, 52, 61, 71) forming the seal chamber (25) is assembled after the insertion of the transport cooling machine (10) into the assembly opening (16) and before the insertion of the plastic to be foamed into the seal chamber (25), in particular is connected to at least one other element (21) and/or that at least one element (26, 86, 96, 98) forming the seal chamber (25) is assembled after the insertion of plastic to be foamed into the seal chamber (25), in particular is connected to at least one other element (21, 23, 81, 83, 91, 93).

14. Method according to claim 13,
- in which at least one element (23, 26, 86, 96, 98) partially forming the seal chamber (25) is assembled after the insertion of the transport cooling machine (10) into the assembly opening (16) and the one element (23, 26, 86, 96, 98) partially forming the seal chamber (25) is connected in a form-fit or firmly bonded manner, in particular by the foamed plastic (29), to at least one other element (21, 23, 81, 83, 91, 93) partially forming the seal chamber (25) and/or
- in which at least one element (23, 26, 30, 41, 52, 61, 71, 86, 96, 98) at least partially forming the seal chamber (25) is assembled in a form-fit, firmly bonded and/or force-fit manner between the wall panel (12) and the transport cooling machine (10) after the insertion of the transport cooling machine (10) into the assembly opening (16).

15. Method for producing a box body according to one of claims 1 to 12,
- in which the at least one foamed plastic (29) is compressed between the wall panel (12) and the transport cooling machine (10) in a direction perpendicular to the wall panel after the assembly of the transport cooling machine (10) in the assembly opening (16) in the wall panel (12) by at least one retaining profile (31, 42, 51, 62, 71) which is preferably formed from at least two retaining profile parts (43, 44, 53, 54, 63, 64, 73, 74) which are preferably connected to each other in a form-fit and/or firmly bonded manner, and
in which, preferably, at least one retaining profile (43, 53, 63, 73) is fixed to the wall panel (12) and/or to the transport cooling machine (10) before the insertion of the transport cooling machine (10) into the assembly opening (16) and/or at least one retaining profile (44, 54, 64, 74) is assembled after the insertion of the transport cooling machine (10) into the assembly opening (16), preferably is connected to the at least one pre-assembled retaining profile (43, 53, 63, 73), in particular by the filling with foam of the plastic in the at least one seal chamber (25).

## Revendications

1. Superstructure (1) d'un véhicule utilitaire, en particulier d'un camion, d'une remorque ou d'un semi-remorque, comportant un panneau (12) et un groupe frigorifique (10), dans laquelle le panneau (12) présente une ouverture de montage (16) destinée à recevoir le groupe frigorifique (10), le groupe frigorifique (10) étant disposé par sections dans l'ouverture de montage (16) et au moins un joint étant prévu dans l'ouverture de montage (16) entre le panneau (12) et le groupe frigorifique (10),
**caractérisée en ce que** le joint (20, 34, 40, 50, 60, 70, 80, 101, 102, 104, 106) présente au moins une mousse synthétique (29) et **en ce que** le joint présente au moins un espace de garniture (25) essentiellement scellé vers l'extérieur et garni d'une mousse synthétique (29) et/ou au moins un profilé de retenue (31, 42, 51, 62, 71) qui retient la mousse synthétique (29) dans une direction perpendiculaire au panneau (12) sous compression.

2. Superstructure selon la revendication 1, **caractérisée en ce que** le joint (20, 34, 40, 50, 60, 70, 80, 101, 102, 104, 106) est prévu au moins essentiellement circonférentiellement entre le panneau (12) et le groupe frigorifique (10) et **en ce que**, de préférence, l'espace de garniture (25) essentiellement scellé vers l'extérieur et garni de la mousse synthétique (29) est prévu au moins essentiellement circonférentiellement entre le panneau (12) et le groupe frigorifique (10) ou **en ce que** des pièces de coin séparées (108) sont disposées dans les coins (103, 105, 107) du joint (102, 104, 106) entre des espaces de garniture (25) essentiellement scellés vers l'extérieur et garnis de la mousse synthétique (29).

3. Superstructure selon la revendication 1 ou 2, **caractérisée en ce que** l'au moins un espace de garniture (25) est constitué d'au moins deux éléments séparés (21, 23, 26, 30, 41, 52, 61, 71, 81, 83, 86, 91, 93, 96, 98) entourant au moins essentiellement la section de l'espace de garniture (25).

4. Superstructure selon l'une quelconque des revendications 1 à 3, **caractérisée en ce que** l'espace de garniture (25) garni de la mousse synthétique (29) est constitué au moins en partie d'une feuille, de préférence élastique, au moins en partie d'un profilé en plastique, de préférence dur et/ou élastique, au moins en partie d'un profilé de mousse souple, au moins en partie d'une lèvre d'étanchéité (95) prévue entre le panneau (12) et le groupe frigorifique (10) et/ou d'un tuyau (30, 41, 52, 61, 71), de préférence élastique.

5. Superstructure selon l'une quelconque des revendications 1 à 4, **caractérisée en ce qu'**au moins un élément constitutif (21, 81, 83, 91, 93) de l'espace de garniture (25) est fixé au panneau (12) et/ou au groupe frigorifique (10) avant la mise en place du groupe frigorifique (10) dans l'ouverture de montage (16) et/ou **en ce qu'**au moins un élément constitutif (23, 30, 41, 52, 61, 71) de l'espace de garniture (25) est monté, en particulier est lié à au moins un autre élément (21), après la mise en place du groupe frigorifique (10) dans l'ouverture de montage (16) et avant l'introduction de la matière plastique à mousser dans l'espace de garniture (25), et/ou **en ce qu'**au moins un élément constitutif (26, 86, 96, 98) de l'espace de garniture (25) et monté, en particulier est lié à au moins un autre élément (21, 23, 81, 83, 91, 93), après l'introduction de la matière plastique à mousser dans l'espace de garniture (25).

6. Superstructure selon l'une quelconque des revendications 3 à 5, **caractérisée en ce qu'**au moins un élément partiellement constitutif (23, 26, 86, 96, 98) de l'espace de garniture (25), monté après la mise en place du groupe frigorifique (10) dans l'ouverture de montage (16), est lié par complémentarité de forme ou par complémentarité de matière, en particulier par la mousse synthétique (29), avec au moins un autre élément partiellement constitutif (21, 23, 81, 83, 91, 93) de l'espace de garniture (25).

7. Superstructure selon l'une quelconque des revendications 1 à 6, **caractérisée en ce qu'**au moins un élément partiellement constitutif (23, 26, 30, 41, 52, 61, 71, 86, 96, 98) de l'espace de garniture (25) est monté par complémentarité de forme, par complémentarité de matière et/ou par complémentarité de force après la mise en place du groupe frigorifique (10) dans l'ouverture de montage (16) entre le panneau (12) et le groupe frigorifique (10) et/ou **en ce qu'**au moins un élément constitutif (26, 86) de l'espace de garniture (25) présente des ouvertures pour faire passer de l'air chassé de l'espace de garniture (25) pendant le moussage de l'espace de garniture (25).

8. Superstructure selon l'une quelconque des revendications 3 à 7, **caractérisée en ce que** le profilé de retenue (31, 42, 51, 62, 71) est en matière plastique et **en ce que**, de préférence, le profilé de retenue (42, 51, 62, 71) se compose d'au moins deux parties de profilé de retenue (43, 44, 53, 54, 63, 64, 73, 74), de préférence liées entre elles par complémentarité de forme et/ou par complémentarité de matière, et/ou constituées de matière plastique.

9. Superstructure selon la revendication 8, **caractérisée en ce qu'**au moins une partie de profilé de retenue (43, 53, 63, 73) est fixée au panneau (12) et/ou au groupe frigorifique (10) avant la mise en place du groupe frigorifique (10) dans l'ouverture de montage (16) et/ou **en ce qu'**au moins une partie de profilé de retenue (44, 54, 64, 74) est montée après la mise en place du groupe frigorifique (10) dans l'ouverture de montage (16), de préférence est liée à l'au moins une partie de profilé de retenue (43, 53, 63, 73) préalablement montée.

10. Superstructure selon la revendication 8 ou 9, **caractérisée en ce que** le profilé de retenue (31, 42, 51, 62, 71), en particulier les parties de profilé de retenue (43, 44, 53, 54, 63, 64, 73, 74), s'appuient contre au moins une mousse synthétique (29) provenant de directions opposées perpendiculaires au panneau (12), et/ou **en ce que** le profilé de retenue (31, 42, 51, 62, 71), en particulier une partie de profilé de retenue (43, 44, 53, 54, 63, 64, 73, 74), est constitué d'au moins une lèvre d'étanchéité (75) prévue entre le panneau (12) et le groupe frigorifique (10).

11. Superstructure selon l'une quelconque des revendications 1 à 10, **caractérisée en ce que** l'au moins un élément constitutif (21, 23, 26, 30, 41, 52, 61, 71, 81, 83, 86, 91, 93, 96, 98) de l'espace de garniture (25), l'au moins un profilé de retenue (31, 42, 51, 62, 71) et/ou l'au moins une partie de profilé de retenue (43, 44, 53, 54, 63, 64, 73, 74) est fixé par complémentarité de forme, en particulier riveté ou vissé, par complémentarité de matière et/ou par complémentarité de force au panneau (12) et/ou au groupe frigorifique (10) et/ou **en ce que** la mousse synthétique (29), en particulier dans au moins un espace de garniture (25), est un polyuréthane, en particulier sous forme de mousse monocomposant.

12. Superstructure selon l'une quelconque des revendications 1 à 11, **caractérisée en ce que** l'intervalle étanchéifié par le joint (20, 34, 40, 50, 60, 70, 80, 101, 102, 104, 106) entre le panneau (12) et le groupe frigorifique (10) est large d'entre 4 mm et 40 mm, en particulier entre 5 mm et 30 mm, en particulier entre 10 mm et 20 mm.

13. Procédé de fabrication d'une superstructure selon l'une quelconque des revendications 1 à 12,
- dans lequel l'au moins un espace de garniture (25) est constitué d'au moins deux éléments séparés (21, 23, 26, 30, 41, 52, 61, 71, 81, 83, 86, 91, 93, 96, 98) entourant au moins essentiellement la section de l'espace de garniture (25), et
- dans lequel au moins un élément constitutif (21, 81, 83, 91, 93) de l'espace de garniture (25) est fixé au panneau (12) et/ou au groupe frigorifique (10) avant la mise en place du groupe frigorifique (10) dans l'ouverture de montage (16) et/ou au moins un élément constitutif (23, 30, 41, 52, 61, 71) de l'espace de garniture (25) est monté, en particulier est lié à au moins un autre élément (21), après la mise en place du groupe frigorifique (10) dans l'ouverture de montage (16) et avant l'introduction de la matière plastique à mousser dans l'espace de garniture (25), et/ou au moins un élément constitutif (26, 86, 96, 98) de l'espace de garniture (25) et monté, en particulier est lié à au moins un autre élément (21, 23, 81, 83, 91, 93), après l'introduction de la matière plastique à mousser dans l'espace de garniture (25).

14. Procédé selon la revendication 13,
- dans lequel au moins un élément partiellement constitutif (23, 26, 86, 96, 98) de l'espace de garniture (25) est monté après la mise en place du groupe frigorifique (10) dans l'ouverture de montage (16) et l'élément partiellement constitutif (23, 26, 86, 96, 98) de l'espace de garniture (25) est lié par complémentarité de forme ou par complémentarité de matière, en particulier par la mousse synthétique (29), avec au moins un autre élément partiellement constitutif (21, 23, 81, 83, 91, 93) de l'espace de garniture (25), et/ou
- dans lequel au moins un élément partiellement constitutif (23, 26, 30, 41, 52, 61, 71, 86, 96, 98) de l'espace de garniture (25) est monté par complémentarité de forme, par complémentarité de matière et/ou par complémentarité de force après la mise en place du groupe frigorifique (10) dans l'ouverture de montage (16) entre le panneau (12) et le groupe frigorifique (10).

15. Procédé de fabrication d'une superstructure selon l'une quelconque des revendications 1 à 12,
- dans lequel l'au moins une mousse synthétique (29) est comprimée après le montage du groupe frigorifique (10) dans l'ouverture de montage (16) dans le panneau (12) par au moins un profilé de retenue (31, 42, 51, 62, 71), constitué de préférence d'au moins deux parties de profilé de retenue (43, 44, 53, 54, 63, 64, 73, 74), de préférence liées entre elles par complémentarité de forme et/ou par complémentarité de matière, entre le panneau (12) et le groupe frigorifique (10) dans une direction perpendiculaire au panneau, et
- dans lequel, de préférence, au moins une partie de profilé de retenue (43, 53, 63, 73) est fixée au panneau (12) et/ou au groupe frigorifique (10) avant la mise en place du groupe frigorifique (10) dans l'ouverture de montage (16) et/ou au moins une partie de profilé de retenue (44, 54, 64, 74) est montée après la mise en place du groupe frigorifique (10) dans l'ouverture de montage (16), de préférence est liée à l'au moins une partie de profilé de retenue (43, 53, 63, 73) préalablement montée, en particulier est liée par le moussage de la matière plastique dans le au moins espace de garniture (25).
